(19) **Europäisches Patentamt**
**European Patent Office**
**Office européen des brevets**

(11) **EP 4 687 343 A1**

(12) **EUROPEAN PATENT APPLICATION**

(43) Date of publication:
04.02.2026 Bulletin 2026/06

(21) Application number: 25186378.3

(22) Date of filing: 30.06.2025

(51) International Patent Classification (IPC):
*H04N 19/527* (2014.01)   *H04N 19/597* (2014.01)
*H04N 19/59* (2014.01)

(52) Cooperative Patent Classification (CPC):
**H04N 19/527; H04N 19/59;** H04N 19/597;
H04N 19/70

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 31.07.2024 US 202463677799 P

(71) Applicant: **Nokia Technologies Oy
02610 Espoo (FI)**

(72) Inventors:
• **HANNUKSELA, Miska Matias
Tampere (FI)**
• **BOYCE, Jill
Portland, Oregon (US)**

(74) Representative: **Nokia EPO representatives
Nokia Technologies Oy
Karakaari 7
02610 Espoo (FI)**

(54) **SPATIAL EXTRAPOLATION AS PREDICTOR IN VIDEO CODING**

(57)    A method comprising: forming an extended field-of-view (FOV) picture; deriving a prediction signal by using the extended-FOV picture; and using the prediction signal to encode at least a part of a current source picture to a current coded picture.

EP 4 687 343 A1

**Description**

TECHNICAL FIELD

The examples and non-limiting embodiments relate generally to spatial extrapolation as a predictor in video coding.

BACKGROUND

It is known to perform data compression and data decompression in a multimedia system.

SUMMARY

In accordance with an aspect, a method includes forming an extended field-of-view (FOV) picture; deriving a prediction signal by using the extended-FOV picture; and using the prediction signal to encode at least a part of a current source picture to a current coded picture.

In accordance with an aspect, a method includes forming an extended field-of-view (FOV) picture; deriving a prediction signal by using the extended-FOV picture; and using the prediction signal to decode at least a part of a current coded picture to a current reconstructed picture.

In accordance with an aspect, a method includes obtaining a previous source picture; forming an extended field of view (FOV) picture from the previous source picture; encoding the extended-FOV picture to a previous coded picture; wherein the encoding of the extended-FOV picture to the previous coded picture comprises reconstructing a previous reconstructed picture; and encoding a current source picture to a current coded picture, based on the previous reconstructed picture; wherein the encoding of the current source picture to the current coded picture comprises reconstructing a current reconstructed picture.

In accordance with an aspect, a method includes obtaining global motion; forming an extended field-of-view (FOV) picture; wherein the forming of the extended-FOV picture comprises extending a core picture or a previous reconstructed picture spatially according to the obtained global motion; deriving a prediction signal by using the extended-FOV picture; and using the prediction signal to encode at least a part of a current source picture to a current coded picture.

In accordance with an aspect, a method includes obtaining non-zero global motion between a core picture and a current source picture; forming an extended field-of-view (FOV) picture; wherein the forming of the extended-FOV picture comprises extrapolating the core picture spatially according to the obtained non-zero global motion; deriving a prediction signal by using the extended-FOV picture; and using the prediction signal to encode at least a part of the current source picture to a current coded picture.

BRIEF DESCRIPTION OF THE DRAWINGS

The foregoing embodiments and other features are explained in the following description, taken in connection with the accompanying drawings, wherein:

FIG. 1 shows an example of an embodiment for spatial extrapolation as an in-loop operation to extend one or more reference pictures spatially.

FIG. 2 shows usage of scaling windows for the example of FIG. 1.

FIG. 3 shows an example of spatial extrapolation as an in-loop operation to form a prediction of one or more slices of the current picture.

FIG. 4 shows an encoder according to an embodiment.

FIG. 5 shows a decoder according to an embodiment.

FIG. 6 is a block diagram illustrating a system in accordance with an example.

FIG. 7 is an example apparatus configured to implement the examples described herein.

FIG. 8 shows a representation of an example of non-volatile memory media used to store instructions that implement the examples described herein.

FIG. 9 is an example method, based on the examples described herein.

FIG. 10 is an example method, based on the examples described herein.

FIG. 11 is an example method, based on the examples described herein.

FIG. 12 is an example method, based on the examples described herein.

FIG. 13 is an example method, based on the examples described herein.

DETAILED DESCRIPTION OF EXAMPLE EMBODIMENTS

**Video coding**

A video codec consists of an encoder that transforms the input video into a compressed representation suited for storage/transmission and a decoder that can decompress the compressed video representation back into a viewable form. Typically encoder discards some information in the original video sequence in order to represent the video in a more compact form (that is, at lower bitrate).

Typical hybrid video codecs, for example ITU-T H.263 and H.264, encode the video information in two phases. Firstly pixel values in a certain picture area (or "block") are predicted for example by motion compensation means (finding and indicating an area in one of the previously coded video frames that corresponds closely to the block being coded) or by spatial means (using the pixel values around the block to be coded in a specified manner). Secondly the prediction error, i.e. the difference between the predicted block of pixels and the original block of pixels, is coded. This is typically done by transforming the difference in pixel values using a specified transform (e.g. Discrete Cosine Transform (DCT) or a variant of it), quantizing the coefficients and entropy coding the quantized coefficients. By varying the fidelity of the quantization process, the encoder can control the balance between the accuracy of the pixel representation (picture quality) and size of the resulting coded video representation (file size or transmission bitrate).

Inter prediction, which may also be referred to as temporal prediction, motion compensation, or motion-compensated prediction, exploits temporal redundancy. In inter prediction the sources of prediction are previously decoded pictures (also known as reference pictures).

In temporal inter prediction, the sources of prediction are previously decoded pictures in the same scalable layer. In intra block copy (IBC; also known as intra-block-copy prediction), prediction may be applied similarly to temporal inter prediction but the reference picture is the current picture and only previously decoded samples can be referred in the prediction process. Inter-layer or inter-view prediction may be applied similarly to temporal inter prediction, but the reference picture is a decoded picture from another scalable layer or from another view, respectively. In some cases, inter prediction may refer to temporal inter prediction only, while in other cases inter prediction may refer collectively to temporal inter prediction and any of intra block copy, inter-layer prediction, and inter-view prediction provided that they are performed with the same or similar process than temporal prediction. Inter prediction, temporal inter prediction, or temporal prediction may sometimes be referred to as motion compensation or motion-compensated prediction.

Intra prediction utilizes the fact that adjacent pixels within the same picture are likely to be correlated. Intra prediction can be performed in spatial or transform domain, i.e., either sample values or transform coefficients can be predicted. Intra prediction is typically exploited in intra coding, where no inter prediction is applied.

One outcome of the coding procedure is a set of coding parameters, such as motion vectors and quantized transform coefficients. Many parameters can be entropy-coded more efficiently if they are predicted first from spatially or temporally neighboring parameters. For example, a motion vector may be predicted from spatially adjacent motion vectors and only the difference relative to the motion vector predictor may be coded. Prediction of coding parameters and intra prediction may be collectively referred to as in-picture prediction.

The decoder reconstructs the output video by applying prediction means similar to the encoder to form a predicted representation of the pixel blocks (using the motion or spatial information created by the encoder and stored in the compressed representation) and prediction error decoding (inverse operation of the prediction error coding recovering the quantized prediction error signal in spatial pixel domain). After applying prediction and prediction error decoding means the decoder sums up the prediction and prediction error signals (pixel values) to form the output video frame. The decoder (and encoder) can also apply additional filtering means to improve the quality of the output video before passing it for display and/or storing it as prediction reference for the forthcoming frames in the video sequence.

In typical video codecs the motion information is indicated with motion vectors associated with each motion compensated image block. Each of these motion vectors represents the displacement of the image block in the picture to be coded (in the encoder side) or decoded (in the decoder side) and the prediction source block in one of the previously coded or decoded pictures. In order to represent motion vectors efficiently those are typically coded differentially with respect to block specific predicted motion vectors. In typical video codecs the predicted motion vectors are created in a predefined way, for example calculating the median of the encoded or decoded motion vectors of the adjacent blocks. Another way to create motion vector predictions is to generate a list of candidate predictions from adjacent blocks and/or co-located blocks in temporal reference pictures and signaling the chosen candidate as the motion vector predictor. In addition to predicting the motion vector values, the reference index of previously coded/decoded picture can be predicted. The reference index is typically predicted from adjacent blocks and/or or co-located blocks in temporal reference picture. Moreover, typical high efficiency video codecs employ an additional motion information coding/decoding mechanism, often called merging/merge mode, where all the motion field information, which includes motion vector and corresponding reference picture index for each available reference picture list, is predicted and used without any modification/correction. Similarly, predicting the motion field information is carried out using the motion field information of adjacent blocks and/or co-located blocks in temporal reference pictures and the used motion field information is signaled among a list of motion field candidate list filled with motion field information of available adjacent/co-located blocks.

In typical video codecs the prediction residual after motion compensation is first transformed with a transform kernel (like DCT) and then coded. The reason for this is that often there still exists some correlation among the residual and transform can in many cases help reduce this correlation and provide more efficient coding.

Typical video encoders utilize Lagrangian cost functions to find optimal coding modes, e.g. the desired Macroblock mode and associated motion vectors. This kind of cost function uses a weighting factor $\lambda$ to tie together the (exact or estimated) image distortion due to lossy coding methods and the (exact or estimated) amount of information that is required to represent the pixel values in an image area:

$$C = D + \lambda R \quad \text{(Equation 1)}$$

In the above equation, C is the Lagrangian cost to be minimized, D is the image distortion (e.g. Mean Squared Error) with the mode and motion vectors considered, and R the number of bits needed to represent the required data to reconstruct the image block in the decoder (including the amount of data to represent the candidate motion vectors).

Version 1 of the High Efficiency Video Coding (H.265/HEVC a.k.a. HEVC) standard was developed by the Joint Collaborative Team - Video Coding (JCT-VC) of VCEG and MPEG. The standard was published by both parent standardization organizations, and it is referred to as ITU-T Recommendation H.265 and ISO/IEC International Standard 23008-2, also known as MPEG-H Part 2 High Efficiency Video Coding (HEVC). Later versions of H.265/HEVC included scalable, multiview, fidelity range, three-dimensional, and screen content coding extensions which may be abbreviated SHVC, MV-HEVC, REXT, 3D-HEVC, and SCC, respectively.

Versatile Video Coding (VVC) (MPEG-I Part 3), a.k.a. ITU-T H.266, is a video compression standard developed by the Joint Video Experts Team (JVET) of the Moving Picture Experts Group (MPEG), (formally ISO/IEC JTC1 SC29 WG11) and Video Coding Experts Group (VCEG) of the International Telecommunication Union (ITU) to be the successor to HEVC/H.265.

A specification of the AV1 bitstream format and decoding process were developed by the Alliance for Open Media (AOM). The AV1 specification was published in 2018. AOM is reportedly working on the AV2 specification.

Some key definitions, bitstream and coding structures, and concepts of some video coding standards and specifications are described in this section for providing background for a video encoder, decoder, encoding method, decoding method, and a bitstream structure, wherein the embodiments may be implemented. It is to be understood that embodiments are not limited to the referenced video coding standards or specifications.

Video coding standards may specify the bitstream syntax and semantics as well as the decoding process for error-free bitstreams, whereas the encoding process might not be specified, but encoders may just be required to generate conforming bitstreams. Bitstream and decoder conformance can be verified with the Hypothetical Reference Decoder (HRD). The standards may contain coding tools that help in coping with transmission errors and losses, but the use of the tools in encoding may be optional and decoding process for erroneous bitstreams might not have been specified.

An elementary unit for the input to an encoder and the output of a decoder, respectively, in many cases is a picture. A picture given as an input to an encoder may also be referred to as a source picture, and a picture decoded by a decoded may be referred to as a decoded picture or a reconstructed picture.

The source and decoded pictures are each comprised of one or more sample arrays, such as one of the following sets of sample arrays:

- Luma (Y) only (monochrome).

- Luma and two chroma (YCbCr or YCgCo).

- Green, Blue and Red (GBR, also known as RGB).

- Arrays representing other unspecified monochrome or tri-stimulus color samplings (for example, YZX, also known as XYZ).

In the following, these arrays may be referred to as luma (or L or Y) and chroma, where the two chroma arrays may be referred to as Cb and Cr; regardless of the actual color representation method in use. The actual color representation method in use can be indicated e.g., in a coded bitstream e.g., using the Video Usability Information (VUI) syntax of HEVC or alike. A component may be defined as an array or single sample from one of the three sample arrays (luma and two chroma) or the array or a single sample of the array that compose a picture in monochrome format.

A picture may be defined to be either a frame or a field. A frame comprises a matrix of luma samples and possibly the corresponding chroma samples. A field is a set of alternate sample rows of a frame and may be used as encoder input, when the source signal is interlaced. Chroma sample arrays may be absent (and hence monochrome sampling may be in use) or chroma sample arrays may be subsampled when compared to luma sample arrays.

Some chroma formats may be summarized as follows:

- In monochrome sampling there is only one sample array, which may be nominally considered the luma array.

- In 4:2:0 sampling, each of the two chroma arrays has half the height and half the width of the luma array.

- In 4:2:2 sampling, each of the two chroma arrays has the same height and half the width of the luma array.

- In 4:4:4 sampling when no separate color planes are in use, each of the two chroma arrays has the same height and width as the luma array.

A bitstream may be defined as a sequence of bits or a sequence of syntax structures. A bitstream format may constrain the order of syntax structures in the bitstream.

A syntax element may be defined as an element of data represented in a bitstream. A syntax structure may be defined as zero or more syntax elements present together in a bitstream in a specified order.

Syntax structures may be specified, for example, using arithmetic, logical, relational, bit-wise, and assignment operators similar to those available in many programming languages. For example, & may indicate a bit-wise 'AND' operation. Furthermore, syntax structures may be specified with reference to mathematical functions.

Bit-wise operations may be defined as follows:

$\&$ bit-wise "and"
When operating on integer arguments, operates on a two's complement representation of the integer value. When operating on a binary argument that contains fewer bits than another argument, the shorter argument is extended by adding more significant bits equal to 0.

$|$ bit-wise "or"
When operating on integer arguments, operates on a two's complement representation of the integer value. When operating on a binary argument that contains fewer bits than another argument, the shorter argument is extended by adding more significant bits equal to 0.

$\wedge$ bit-wise "exclusive or"
When operating on integer arguments, operates on a two's complement representation of the integer value. When operating on a binary argument that contains fewer bits than another argument, the shorter argument is extended by adding more significant bits equal to 0.

$x >> y$ arithmetic right shift of a two's complement integer representation of x by y binary digits
This function is defined only for non-negative integer values of y. Bits shifted into the most significant bits (MSBs) as a result of the right shift have a value equal to the MSB of x prior to the shift operation.

$x << y$ arithmetic left shift of a two's complement integer representation of x by y binary digits
This function is defined only for non-negative integer values of y. Bits shifted into the least significant bits (LSBs) as a result of the left shift have a value equal to 0.

Syntax structures and semantics may use the values of variables derived from the values of syntax elements. Naming conventions may be defined for variables. For example, variables may be named by a mixture of lower case and upper case letter and without any underscore characters. Variables starting with an upper case letter may be derived for the decoding of the current syntax structure and all depending syntax structures. Variables starting with an upper case letter may, in some cases, be used in the decoding process for later syntax structures without mentioning the originating syntax structure of the variable. Variables starting with a lower case letter may only be used in relation to the syntax structure or function they have been defined for.

An elementary unit for the output of an encoder and the input of a decoder, respectively, may be a Network Abstraction Layer (NAL) unit. For transport over packet-oriented networks or storage into structured files, NAL units may be encapsulated into packets or similar structures. A bytestream format has been specified in some video coding standards for transmission or storage environments that do not provide framing structures. The bytestream format separates NAL units from each other by attaching a start code in front of each NAL unit. To avoid false detection of NAL unit boundaries, encoders run a byte-oriented start code emulation prevention algorithm, which adds an emulation prevention byte to the NAL unit payload if a start code would have occurred otherwise. In order to enable straightforward gateway operation between packet- and stream-oriented systems, start code emulation prevention may always be performed regardless of whether the bytestream format is in use or not. A NAL unit may be defined as a syntax structure containing an indication of the type of data to follow and bytes containing that data in the form of an RBSP interspersed as necessary with emulation prevention bytes. A raw byte sequence payload (RBSP) may be defined as a syntax structure containing an integer number of bytes that is encapsulated in a NAL unit. An RBSP is either empty or has the form of a string of data bits containing syntax elements followed by an RBSP stop bit and followed by zero or more subsequent bits equal to 0.

A bitstream may be defined to logically include a syntax structure, such as a NAL unit, when the syntax structure is transmitted along the bitstream but may be included in the bitstream according to the bitstream format. A bitstream may be defined to natively comprise a syntax structure, when the bitstream includes the syntax structure.

In some coding formats or standards, a bitstream may be in the form of a network abstraction layer (NAL) unit stream or a byte stream, that forms the representation of coded pictures and associated data forming one or more coded video sequences.

In some coding formats, such as AV1, a bitstream may comprise a sequence of open bitstream units (OBUs). An OBU comprises a header and a payload, wherein the header identifies a type of the OBU. Furthermore, the header may comprise a size of the payload in bytes.

In some coding standards, NAL units include a header and payload. In some coding standards, the NAL unit header indicates the type of the NAL unit. In some coding standards, the NAL unit header indicates a scalability layer identifier (e.g., called nuh_layer_id), which may be used, e.g., for indicating spatial or quality layers, views of a multiview video, or auxiliary layers (such as depth maps or alpha planes). In some coding standards, the NAL unit header includes a temporal sublayer identifier, which may be used for indicating temporal subsets of the bitstream, such as a 30-frames-per-second subset of a 60-frames-per-second bitstream.

Bitstreams or coded video sequences may be encoded to be temporally scalable as follows. Each picture may be assigned to a particular temporal sub-layer. A temporal sub-layer may be equivalently called a sub-layer, temporal sublayer, sublayer, or temporal level. Temporal sub-layers may be enumerated, e.g., from 0 upwards. The lowest temporal sub-layer, sub-layer 0, may be decoded independently. Pictures at temporal sub-layer 1 may be predicted from reconstructed pictures at temporal sub-layers 0 and 1. Pictures at temporal sub-layer 2 may be predicted from reconstructed pictures at temporal sub-layers 0, 1, and 2, and so on. In other words, a picture at temporal sub-layer N does not use any picture at temporal sub-layer greater than N as a reference for inter prediction. The bitstream created by excluding all pictures greater than or equal to a selected sub-layer value and including pictures remains conforming.

Each picture of a temporally scalable bitstream may be assigned with a temporal identifier (also known as TID, temporal layer identifier, sub-layer identifier, sublayer identifier, temporal sub-layer identifier, temporal sublayer identifier, or temporal layer ID), which may be, for example, assigned to a variable TemporalId. The temporal identifier may, for example, be indicated in a NAL unit header or in an OBU extension header. TemporalId equal to 0 corresponds to the lowest temporal level. The bitstream created by excluding all coded pictures having a TemporalId greater than or equal to a selected value and including all other coded pictures remains conforming. Consequently, a picture having TemporalId equal to tid_value does not use any picture having a TemporalId greater than tid_value as a prediction reference. In some video coding standards, a sub-layer or a temporal sub-layer may be defined to be a temporal scalable layer (or a temporal layer, TL) of a temporal scalable bitstream, consisting of VCL NAL units with a particular value of the TemporalId variable and the associated non-VCL NAL units.

NAL units can be categorized into Video Coding Layer (VCL) NAL units and non-VCL NAL units. VCL NAL units are typically coded slice NAL units.

A non-VCL NAL unit may be for example one of the following types: a video parameter set (VPS), a sequence parameter set (SPS), a picture parameter set (PPS), an adaptation parameter set (APS), a supplemental enhancement information (SEI) NAL unit, an access unit delimiter, an end of sequence (EOS) NAL unit, an end of bitstream (EOB) NAL unit, or a filler data NAL unit. Parameter sets may be needed for the reconstruction of decoded pictures, whereas many of the other non-VCL NAL units may not be necessary for the reconstruction of decoded sample values.

Some coding formats specify parameter sets that may carry parameter values needed for the decoding or reconstruction of decoded pictures. A parameter may be defined as a syntax element of a parameter set. A parameter set may be defined as a syntax structure that contains parameters and that can be referred to from or activated by another syntax structure, for example, using an identifier.

Some types of parameter sets are briefly described in the following, but it needs to be understood, that other types of parameter sets may exist and that embodiments may be applied but are not limited to the described types of parameter sets.

Parameters that remain unchanged through a coded video sequence may be included in a sequence parameter set. Alternatively, the SPS may be limited to apply to a layer that references the SPS, e.g. the SPS may remain valid for a coded layer video sequence. In addition to the parameters that may be needed by the decoding process, the sequence parameter set may optionally contain video usability information (VUI), which includes parameters that may be important for buffering, picture output timing, rendering, and resource reservation.

A picture parameter set contains such parameters that are likely to be unchanged in several coded pictures. A picture parameter set may include parameters that can be referred to by the VCL NAL units of one or more coded pictures.

A video parameter set (VPS) may be defined as a syntax structure containing syntax elements that apply to zero or more entire coded video sequences and may contain parameters applying to multiple layers. VPS may provide information about the dependency relationships of the layers in a bitstream, as well as many other information that are applicable to all slices across all layers in the entire coded video sequence.

A video parameter set may include parameters that can be referred to by one or more sequence parameter sets.

The relationship and hierarchy between the VPS, the SPS, and the PPS may be described as follows. A VPS resides one level above an SPS in the parameter set hierarchy and in the context of scalability. The VPS may include parameters that are common for all slices across all layers in the entire coded video sequence. The SPS includes the parameters that are common for all slices in a particular layer in the entire coded video sequence and may be shared by multiple layers. The PPS includes the parameters that are common for all slices in a particular picture and are likely to be shared by all slices in multiple pictures.

The APS may be specified in some coding formats, such as H.266/VVC. The APS may be allowed to apply to one or more image segments, such as slices. In H.266/VVC, the APS may be defined as a syntax structure containing syntax elements that apply to zero or more slices as determined by zero or more syntax elements found in slice headers or in a picture header. The APS may comprise a type (aps_params_type in H.266/VVC) and an identifier (aps_adaptation_parameter_set_id in H.266/VVC). The combination of an APS type and an APS identifier may be used to identify a particular APS. H.266/VVC comprises three APS types: an adaptive loop filtering (ALF), a luma mapping with chroma scaling (LMCS), and a scaling list APS types. The ALF APS(s) are referenced from a slice header (thus, the referenced ALF APSs can change slice by slice), and the LMCS and scaling list APS(s) are referenced from a picture header (thus, the referenced LMCS and scaling list APSs can change picture by picture).

Many instances of parameter sets may be allowed in a bitstream, and each instance is identified with a unique identifier. In order to limit the memory usage needed for parameter sets, the value range for parameter set identifiers has been limited. Each slice header (in HEVC) or each picture header (in VVC) includes the identifier of the picture parameter set that is active for the decoding of the picture that contains the slice or the picture, respectively, and each picture parameter set contains the identifier of the active sequence parameter set. Consequently, the transmission of picture and sequence parameter sets does not have to be accurately synchronized with the transmission of slices. Instead, it is sufficient that the active sequence and picture parameter sets are received at any moment before they are referenced, which allows transmission of parameter sets 'out-of-band' using a more reliable transmission mechanism compared to the protocols used for the slice data. For example, parameter sets can be included as a parameter in the session description for Real-time Transport Protocol (RTP) sessions. When parameter sets are transmitted in-band, they can be repeated to improve error robustness.

Out-of-band transmission, signaling or storage can additionally or alternatively be used for other purposes than tolerance against transmission errors, such as ease of access or session negotiation. For example, a sample entry of a track in a file conforming to the ISO Base Media File Format may comprise parameter sets, while the coded data in the bitstream is stored elsewhere in the file or in another file.

Instead of or in addition to parameter sets at different hierarchy levels (e.g., sequence and picture), video coding formats may include header syntax structures, such as a sequence header or a picture header.

A sequence header may precede any other data of the coded video sequence in the bitstream order. It may be allowed to repeat a sequence header in the bitstream, e.g., to provide a sequence header at a random access point.

A picture header may precede any coded video data for the picture in the bitstream order. A picture header may be interchangeably referred to as a frame header. Some video coding specifications may enable carriage of a picture header in a dedicated picture header NAL unit or a frame header OBU or alike. Some video coding specifications may enable carriage of a picture header in a NAL unit, OBU, or alike syntax structure that also contains coded picture data.

A coded picture may be defined as a coded representation of a picture.

A random access point may be defined as a location within a bitstream where decoding can be started.

A Random Access Point (RAP) picture may be defined as a picture that serves as a random access point, i.e., as a picture where decoding can be started. In some contexts, the term random-access picture may be used interchangeably with the term RAP picture.

An intra random access point (IRAP) picture, when contained in a single-layer bitstream or an independent layer, may comprise only intra-coded image segments. Furthermore, an IRAP picture may constrain subsequence pictures in output order to be such that they can be correctly decoded without performing the decoding process of any pictures that precede the IRAP picture in decoding order.

Some specifications may define a key frame as an intra frame that resets the decoding process when it is shown. Hence, a key frame is similar to an IRAP picture contained in a single-layer bitstream or an independent layer.

In some contexts, an IRAP picture may be defined as one category of random-access pictures, characterized in that they contain only intra-coded image segments, whereas there may also be other category or categories of random-access pictures, such as a gradual decoding refresh (GDR) picture.

Some coding standards or specifications, such as H.265/HEVC, may use the NAL unit type of VCL NAL unit(s) of a picture to indicate a picture type. In H.266/VVC, the NAL unit type indicates a picture type when mixed VCL NAL unit types within a coded picture are disabled (pps_mixed_nalu_types_in_pic_flag is equal to 0 in the referenced PPS), while otherwise it indicates a subpicture type.

In some coding formats, picture unit (PU) may be defined as a set of data units, such as NAL units, that are associated with each other, are consecutive in decoding order, and contain exactly one coded picture. For example, certain non-video-coding data units, such as non-VCL NAL units, may be next to coded video data units in decoding order and the respective picture unit may comprise both these non-video-coding data units and the video coding data units of a coded picture.

In some coding formats, an access unit (AU) may be defined as a set of NAL units that are associated with each other according to a specified classification rule, are consecutive in decoding order, and include at most one coded picture at any scalability layer (e.g., with any specific value of nuh _layer_id in some coding formats, such as HEVC or VVC). In some coding formats, an access unit comprises one or more complete picture units. In some coding formats, in addition to including the VCL NAL units of a coded picture, an access unit may also include non-VCL NAL units associated with the coded picture. Said specified classification rule may, for example, associate pictures with the same output time or picture order count value into the same access unit.

In some coding formats, a coded video sequence (CVS) may be defined as a sequence of coded pictures in decoding order that is independently decodable and is followed by another coded video sequence or the end of the bitstream.

In some coding formats, such as AV1, a coded video sequence comprises one or more temporal units. A temporal unit consists of a series of OBUs starting from a temporal delimiter, optional sequence headers, optional metadata OBUs, a sequence of one or more frame headers, each followed by zero or more tile group OBUs as well as optional padding OBUs. A temporal unit may be defined to comprise all the OBUs that are associated with a specific, distinct time instant. A temporal unit may comprise a temporal delimiter OBU, and all the OBUs that follow, up to but not including the next temporal delimiter. A temporal delimiter OBU may be defined as an indication that the following OBUs will have a different presentation/decoding time stamp from the one of the last frame prior to the temporal delimiter.

A coded layer video sequence (CLVS) may be defined as a sequence of pictures and associated other data within the same scalable layer (e.g., with the same value of nuh_layer_id) that is decodable independently of other pictures in the same layer.

Pictures can be split into independently codable and decodable image segments (e.g., slices or tiles or tile groups). Such image segments may enable parallel processing. Image segments may be coded as separate units in the bitstream, such as VCL NAL units in HEVC and VVC. Coded image segments may comprise a header and a payload, wherein the header contains parameter values needed for decoding the payload.

In some video coding formats, such as HEVC and VVC, a picture is divided into one or more tile rows and one or more tile columns. In some video coding formats, a tile is a sequence of coding tree units (CTU) that covers a rectangular region of a picture. The partitioning to tiles forms a grid that may be characterized by a list of tile column widths (in CTUs) and a list of tile row heights (in CTUs). For encoding and/or decoding, the CTUs in a tile are scanned in raster scan order within that tile. In HEVC, tiles are ordered in the bitstream consecutively in the raster scan order of the tile grid.

In some video coding formats, such as AV1, a picture may be partitioned into tiles, and a tile consists of an integer number of complete superblocks that collectively form a complete rectangular region of a picture. In-picture prediction across tile boundaries is disabled. The minimum tile size is one superblock, and the maximum tile size in the presently specified levels in AV1 is $4096 \times 2304$ in terms of luma sample count. The picture is partitioned into a tile grid of one or more tile rows and one or more tile columns. The tile grid may be signaled in the picture header to have a uniform tile size or nonuniform tile size, where in the latter case the tile row heights and tile column widths are signaled. The superblocks in a tile are scanned in raster scan order within that tile.

In some video coding formats, such as VVC, a slice consists of an integer number of complete tiles or an integer number of consecutive complete CTU rows within a tile of a picture. Consequently, each vertical slice boundary is always also a vertical tile boundary. It is possible that a horizontal boundary of a slice is not a tile boundary but consists of horizontal CTU boundaries within a tile; this occurs when a tile is split into multiple rectangular slices, each of which consists of an integer number of consecutive complete CTU rows within the tile.

In some video coding formats, such as VVC, two modes of slices are supported, namely the raster-scan slice mode and the rectangular slice mode. In the raster-scan slice mode, a slice contains a sequence of complete tiles in a tile raster scan of a picture. In the rectangular slice mode, a slice contains either a number of complete tiles that collectively form a rectangular region of the picture or a number of consecutive complete CTU rows of one tile that collectively form a rectangular region of the picture. Tiles within a rectangular slice are scanned in tile raster scan order within the rectangular region corresponding to that slice.

In HEVC, a slice consists of an integer number of CTUs. The CTUs are scanned in the raster scan order of CTUs within tiles or within a picture, if tiles are not in use. A slice may contain an integer number of tiles, or a slice can be contained in a tile. Within a CTU, the CUs have a specific scan order.

In HEVC, a slice is defined to be an integer number of coding tree units contained in one independent slice segment and all subsequent dependent slice segments (if any) that precede the next independent slice segment (if any) within the same access unit. In HEVC, a slice segment is defined to be an integer number of coding tree units ordered consecutively in the tile scan and contained in a single NAL (Network Abstraction Layer) unit. The division of each picture into slice segments is a partitioning. In HEVC, an independent slice segment is defined to be a slice segment for which the values of the syntax elements of the slice segment header are not inferred from the values for a preceding slice segment, and a dependent slice segment is defined to be a slice segment for which the values of some syntax elements of the slice segment header are inferred from the values for the preceding independent slice segment in decoding order. In HEVC, a slice header is defined to be the slice segment header of the independent slice segment that is a current slice segment or is the independent slice segment that precedes a current dependent slice segment, and a slice segment header is defined to be a part of a coded slice segment containing the data elements pertaining to the first or all coding tree units represented in the slice segment. The CUs are scanned in the raster scan order of LCUs within tiles or within a picture, if tiles are not in use. Within an LCU, the CUs have a specific scan order.

In some video coding formats, such as AV1, a tile group OBU carries one or more complete tiles. The first and last tiles of in the tile group OBU may be indicated in the tile group OBU before the coded tile data. Tiles within a tile group OBU may appear in a tile raster scan of a picture.

In some video coding formats, such as VVC, a subpicture may be defined as a rectangular region of one or more slices within a picture, wherein the one or more slices are complete. Thus, a subpicture consists of one or more slices that collectively cover a rectangular region of a picture. Consequently, each subpicture boundary is also always a slice boundary, and each vertical subpicture boundary is always also a vertical tile boundary. The slices of a subpicture may be required to be rectangular slices. One or both of the following conditions may be required to be fulfilled for each subpicture and tile: i) all CTUs in a subpicture belong to the same tile; ii) All CTUs in a tile belong to the same subpicture.

An independent subpicture (a.k.a. an extractable subpicture) may be defined as a subpicture with subpicture boundaries that are treated as picture boundaries. Additionally, it may be required that an independent subpicture has no loop filtering across the subpicture boundaries.

A dependent subpicture may be defined as a subpicture that is not an independent subpicture.

One or more of the following properties may be indicated (e.g., by an encoder) or decoded (e.g., by a decoder) or inferred (e.g., by an encoder and/or a decoder) for the subpictures collectively or per each subpicture individually: i) whether or not a subpicture is treated like a picture in the decoding process (or equivalently, whether or not subpicture boundaries are treated like picture boundaries in the decoding process); in some cases, this property excludes in-loop filtering operations, which may be separately indicated/decoded/inferred; ii) whether or not in-loop filtering operations are performed across the subpicture boundaries. When a subpicture is treated like a picture in the decoding process, any references to sample locations outside the subpicture boundaries are saturated to be within the subpicture boundaries. This may be regarded being equivalent to padding samples outside subpicture boundaries with the boundary sample values for decoding the subpicture. Consequently, motion vectors may be allowed to cause references outside subpicture boundaries in a subpicture that is extractable.

Boundaries of a subpicture are treated like picture boundaries in the VVC decoding process when sps_subpic_treated_as_pic_flag[ i ] is equal to 1 for the subpicture. Loop filtering across the boundaries of a subpicture is disabled in the VVC decoding process when sps_loop_filter_across_subpic_enabled_pic_flag[ i ] is equal to 0.

In some video coding formats, such as VVC, the feature of independent subpictures enables efficient extraction of subpicture(s) from one or more bitstream and merging the extracted subpictures to form another bitstream without excessive penalty in compression efficiency and without modifications of VCL NAL units (e.g., slices).

Video coding specifications may enable the use of supplemental enhancement information (SEI) messages or alike. Some video coding specifications include SEI NAL units, and some video coding specifications contain both prefix SEI NAL units and suffix SEI NAL units, where the former type can start a picture unit or alike and the latter type can end a picture unit or alike. An SEI NAL unit contains one or more SEI messages, which are not required for the decoding of output pictures but may assist in related processes, such as picture output timing, post-processing of decoded pictures, rendering, error detection, error concealment, and resource reservation. Several SEI messages are specified in H.265/HEVC, H.266/VVC, and H.274/VSEI standards, and the user data SEI messages enable organizations and companies to specify SEI messages for their own use. The standards may contain the syntax and semantics for the specified SEI messages but a process for handling the messages in the recipient might not be defined. Consequently, encoders may be required to follow the standard specifying a SEI message when they create SEI message(s), and decoders might not be required to process SEI messages for output order conformance.

Some video coding specifications include SEI network abstraction layer (NAL) units, and some video coding specifications contain both prefix SEI NAL units and suffix SEI NAL units, where the former type can start a picture unit or alike and the latter type can end a picture unit or alike. An SEI NAL unit contains one or more SEI messages,

Some video coding specifications enable metadata OBUs. A metadata OBU comprises a type field, which specifies the type of metadata. A metadata OBU may be understood to be similar to an SEI NAL unit or an SEI message.

ITU-T Recommendation H.274, which is equivalent to ISO/IEC 23002-7, may be called "versatile supplemental enhancement information messages for coded video bitstreams" and be referred to as "versatile supplemental enhancement information" or VSEI. The VSEI standard specifies the syntax and semantics of video usability information (VUI) parameters and supplemental enhancement information (SEI) messages. The VUI parameters and SEI messages defined in the VSEI standard are designed to be conveyed within coded video bitstreams in a manner specified in a video coding specification or to be conveyed by other means determined by the specifications for systems that make use of such coded video bitstreams. The VSEI standard is intended for use with VVC coded video bitstreams, although it is drafted in a manner intended to be sufficiently generic that it may also be used with other types of coded video bitstreams.

Referring to sample locations outside the picture boundaries

In several video coding standards, motion vectors are allowed to point to an area outside the picture boundaries for obtaining the prediction block and fractional sample interpolation may use sample locations outside picture boundaries. For obtaining samples outside picture boundaries as part of the prediction process, the respective samples of the picture boundaries are effectively copied.

The mechanism to support sample locations outside picture boundaries in the inter prediction process may be implemented in multiple ways. One way is to allocate a sample array that is larger than the decoded picture size, i.e. has margins on top of, below, on the right side, and on the left side of the image. In addition to or instead of using such margins, the location of a sample used for prediction (either as input to fractional sample interpolation for the prediction block or as a sample in the prediction block itself) may be saturated so that the location does not exceed the picture boundaries (with margins, if such are used). Some of the video coding standards describe the support of motion vectors over picture boundaries in such manner.

For example, the following equation is used in HEVC for deriving the locations ( $xA_{i,j}$, $yA_{i,j}$ ) inside the given array refPicLXL of luma samples (or a reference picture) for fractional sample interpolation for generating an (intermediate) prediction block:

$$xA_{i,j} = \text{Clip3}(0, \text{pic\_width\_in\_luma\_samples} - 1, xInt_L + i)$$

$$yA_{i,j} = \text{Clip3}(0, \text{pic\_height\_in\_luma\_samples} - 1, yInt_L + j)$$

where

( $xInt_L$, $yInt_L$ ) is a luma location in full-sample units;
i and j are relative positions within the interpolation filter window;
pic_width_in_luma_samples is the picture width in luma samples;
pic_height_in_luma_samples is the picture height in luma samples; and
Clip3( ) is specified as follows:

$$\text{Clip3}(\,x,\,y,\,z\,) = \begin{cases} x & ; & z < x \\ y & ; & z > y \\ z & ; & \text{otherwise} \end{cases}$$

It can be observed that if a sample location had a negative coordinate (prior to the Clip3) operation, it would saturate to 0 with the Clip3 operation. Similarly, if a sample location had a coordinate greater than width (for horizontal location) or height (for vertical location), it would saturate to width - 1 or height - 1, respectively.

Similar equations exist also for saturating the chroma sample locations to be within the chroma sample array boundaries in the fractional sample interpolation for inter prediction of chroma components.

Intra prediction may be handled as follows when it comes to referencing sample locations outside the picture boundaries. Blocks that are outside the picture boundaries may be treated as unavailable and the respective samples to be used as reference samples for intra prediction may be marked as "not available for intra prediction". The reference samples marked as "not available for intra prediction" may be substituted by reference samples that are available for intra prediction. Consequently, intra prediction does not use samples outside the picture boundaries as reference.

Scaling window

A scaling window may be signaled for and associated with a picture. Scaling windows of a picture and its reference picture may indicate the spatial correspondence between the pictures. Scaling windows may be used to achieve one or both of the following: i) a horizontal scaling ratio and a vertical scaling ratio may be derived based on the width ratio and the height ratio, respectively, of the scaling windows; ii) a left offset and a top offset for inter prediction may be derived. The horizontal and vertical scaling ratios may be used as resampling ratios for reference picture resampling (RPR). The left and top offsets may be used in deriving a spatial correspondence between a picture and its reference picture. The left and top offsets may be added in the reference picture location derivation through a motion vector scaled by a scaling ratio. For example, the top-left corner of the current block is mapped to the respective "anchor location" in the reference picture through the left and top offsets, and a motion vector scaled by a scaling ratio is then applied to obtain a reference block in relation to anchor location. In general, the scaling ratio may be 1: 1, in which case the left and top offsets may be applied without resampling. It needs to be understood that there may be other means to signal scaling ratio(s), top offset, and/or left offset than scaling windows.

In VVC, a scaling window may be indicated in a PPS explicitly or implicitly. When indicated explicitly, pps_scaling_win_left_offset, pps_scaling_win_right_offset, pps_scaling_win_top_offset, and pps_scaling_win_bottom_offset specify the offsets of the scaling window boundaries relative to the left, right, top, and bottom boundaries of the conformance cropping window, respectively. When indicated implicitly, the scaling window is inferred to be identical to the conformance cropping window.

In some coding specifications, the area that a decoder outputs is called the conformance cropping window.

A decoder and/or a hypothetical reference decoder (HRD) may comprise a picture output process. The output process may be considered to be a process in which the decoder provides decoded and cropped pictures as the output of the decoding process. The output process is typically a part of video coding standards, typically as a part of the hypothetical reference decoder specification. In output cropping, lines and/or columns of samples may be removed from decoded pictures according to a cropping rectangle to form output pictures. A cropped decoded picture may be defined as the result of cropping a decoded picture based on the conformance cropping window specified e.g., in the sequence parameter set or the picture parameter set that is referred to by the corresponding coded picture.

**Neural networks**

A neural network (NN) may be described as a computation graph consisting of several layers of computation. Each layer may consist of one or more units, where each unit performs an elementary computation. A unit is connected to one or more other units, and the connection may be associated with a weight. The weight may be used for scaling the signal passing through the associated connection. Weights are learnable parameters, i.e., values which can be learned from training data. There may be other learnable parameters, such as those of batch-normalization layers.

Examples of architectures for neural networks include feed-forward and recurrent architectures. Feed-forward neural networks are such that there is no feedback loop, each layer takes input from one or more of the previous layers and provides its output as the input for one or more of the subsequent layers. Also, units inside a certain layer take input from units in one or more of preceding layers and provide output to one or more of following layers.

In some neural networks, such as convolutional neural networks for image classification, initial layers (those close to the input data) extract semantically low-level features such as edges and textures in images, whereas intermediate layers extract more high-level features. After the feature extraction layers there may be one or more layers performing a certain task, such as classification, semantic segmentation, object detection, denoising, style transfer, super-resolution, etc.

Neural networks are being utilized in an ever-increasing number of applications for many different types of devices, such as mobile phones. Examples include image and video analysis and processing, social media data analysis, device usage data analysis, etc.

One property of neural nets (and other machine learning tools) is that they are able to learn properties from input data, e.g., in supervised way or in unsupervised way. Such learning is a result of a training algorithm, or of a meta-level neural network providing the training signal.

In general, the training algorithm consists of changing some properties of the neural network so that its output is as close as possible to a desired output. For example, in the case of classification of objects in images, the output of the neural network can be used to derive a class or category index which indicates the class or category that the object in the input image belongs to. Training usually happens by minimizing or decreasing the output's error, also referred to as the loss or loss function. Examples of losses are mean squared error, cross-entropy, etc. In recent deep learning techniques, training is an iterative process, where at each iteration the algorithm modifies the weights of the neural net to make a gradual improvement of the network's output, i.e., to gradually decrease the loss, by means of gradient descent technique. In one example, at each training iteration, gradients of the loss function with respect to one or more weights or parameters of the NN are computed, for example by backpropagation technique; the computed gradients are then used by an optimization routine, such as Adam or Stochastic Gradient Descent (SGD) to obtain an update to the one or more weights or parameters.

The terms "model", "neural network", "neural net" and "network" are used interchangeably herein, and also the weights of neural networks are sometimes referred to as learnable parameters or simply as parameters.

Training a neural network is an optimization process, but the final goal may be different from the typical goal of optimization. In optimization, the only goal is to minimize a function. In machine learning, the goal of the optimization or training process is to make the model learn the properties of the data distribution from a limited training dataset. In other words, the goal is to learn to use a limited training dataset in order to learn to generalize to previously unseen data, i.e., data which was not used for training the model. This is usually referred to as generalization. In practice, data is usually split into at least two sets, the training set and the validation set. The training set is used for training the network, i.e., to modify its learnable parameters in order to minimize the loss. The validation set is used for checking the performance of the network on data which was not used to minimize the loss, as an indication of the final performance of the model. In particular, the errors on the training set and on the validation set are monitored during the training process to understand the following things:

--If the network is learning at all - in this case, the training set error should decrease, otherwise the model is in the regime of under fitting.

--If the network is learning to generalize - in this case, also the validation set error needs to decrease and to be not too much higher than the training set error. If the training set error is low, but the validation set error is much higher than the training set error, or it does not decrease, or it even increases, the model may be in the regime of overfitting. This means that the model has just memorized the training set's properties and performs well only on that set, but performs poorly on a set not used for tuning its parameters.

A neural network inference may be defined as applying the neural network with a given input for generating an output.

## Generative artificial intelligence

The term generative artificial intelligence (AI), or generative modeling, or generative machine learning (and other similar terms), are commonly used to indicate a class of models learned from data that are capable of generating new data. State-of-the-art generative models are based on neural networks. The basic components or layers of a generative NN are usually not different from the components or layers of a non-generative NN. Example of such components are convolution layers, non-linear layers, fully-connected layers, normalization layers, attention layers, etc.

One typical example of neural network architecture that allows for generating text data is a Trasformer-based "decoder", where "decoder" may not refer to a decoder that is part of a codec performing compression of input data into a small bitstream. Instead, the decoder is a neural network that gets a set of input words or parts of words or tokens extracted from input words, and outputs a set of output words or parts of words or tokens. At inference time, such a NN is run in auto-regressive mode, where the generated word(s) or token(s) is provided as part of the input word(s) or token(s). In order for such a NN to generate data, it is trained to predict the next word(s) (or an estimate of a probability distribution over the next words) given a set of input words. The NN may be based on the Transformer architecture, which comprises the use of the self-attention mechanism, where an attention score is assigned to each input token or word based on all other input tokens or words, including the previously generated words or tokens. During training of a decoder-style Transformer architecture, the future data items (words or tokens) are masked so not to leak information from the future. In some cases, decoder-style Transformer architectures are referred to as "uni-directional", because they use or process information from left-to-right, as opposed to some encoder-style Transformer architectures that are referred to as "bidirectional" (because they use or process information from left-to-right and from right-to-left).

Another example of generative modeling is visual temporal extrapolation, where a picture is generated by a NN based on one or more previously decoded or generated pictures and on one or more other data items. The one or more previously decoded or generated pictures may be pictures decoded by a process that does not involve generative modeling, such as a traditional codec, e.g., a VVC-compliant codec. The one or more data items may include parameters or features that describe the differences between the one or more previously decoded pictures and the current picture to be temporally extrapolated. Examples of such parameters are facial parameters (such as facial keypoints or facial landmarks and their positions or differential positions with respect to the facial landmarks of a previous picture), or parameters of other objects. The one or more data items may be signaled from encoder to decoder.

Spatial extrapolation may interchangeably be called outpainting, image outpainting, picture extension, image extension, picture expanding, or image expanding, for example. Spatial extrapolation may be achieved through neural network (NN) inference. For example, a generative neural network may be used for spatial extrapolation. Spatial extrapolation generates image content for area(s) adjacent to the picture given as input to the spatial extrapolation process.

Without loss of generality, when this disclosure refers to an NN or an NN inference, pre-processing prior to the NN inference or post-processing subsequent to the NN inference may be included. When this disclosure refers to an NN inference, the NN inference may be performed iteratively, i.e., multiple times with the output of a previous iteration used as an input of a subsequent iteration.

As an example, a spatial extrapolation NN may conceptually operate as follows: The picture area may be first extended according to the determined or decoded dimensions of the extrapolated picture. Then, the following process may be performed iteratively multiple times: Firstly, a pseudo-random number generator is used to add noise to the samples within the extrapolated area, and secondly, the NN inference may be performed.

**Neural Network Representation (NNR)**

ISO/IEC 15938-17 (Compression of Neural Networks for Multimedia Content Description and Analysis) is also known as neural network representation (NNR) or neural network compression (NNC). NNR specifies a compressed representation of the parameters and/or weights of a trained neural network and a decoding process for the compressed representation. NNR complements the description of the network topology in existing neural network exchange formats. NNR is independent of a particular neural network exchange format and is interoperable with common neural network exchange formats.

NNR establishes a toolbox of compression methods, specifying (where applicable) the resulting elements of the compressed bitstream. All of these tools may be applied to the compression of entire neural networks, and some of them may also be applied to the compression of differential updates of neural networks with respect to a base network. Such differential updates are, for example, useful when models are redistributed after fine-tuning or transfer learning, or when providing versions of a neural network with different compression ratios. The support for incremental compression of updates of neural networks respective to a base model was included in the 2nd edition of NNR.

NNR comprises the syntax format, semantics, associated decoding process requirements, parameter sparsification, parameter transformation methods, parameter quantization, entropy coding method and integration/signaling within existing exchange formats.

An NNR bitstream may conform to ISO/IEC 15938-17. NNR bitstream or NNR data in a channel may comprise a sequence of NNR Units. An NNR Unit may be regarded as a basic high-level syntax structure in an NNR bitstream, and may include three syntax elements or structures: NNR Unit Size, NNR unit header, and NNR unit payload.

Use **of neural networks in video coding**

Conventional image and video codecs use a set of filters, e.g., to enhance the visual quality of the predicted visual content and can be applied either in-loop or out-of-loop, or both. In the case of in-loop filters, the filter applied on one block in the currently-encoded frame may affect the encoding of another block in the same frame and/or in another frame which is predicted from the current frame. An in-loop filter can affect the bitrate and/or the visual quality. An enhanced block may cause a smaller residual, difference between original block and predicted-and-filtered block, thus using less bits in the bitstream output by the encoder. An in-loop filter may interchangeably be called a loop filter. In general, the prefix "in-loop" may be used as a prefix for a method to indicate that the method may affect the reconstruction of image data that may subsequently be used as a reference for prediction. An out-of-loop filter may be applied on a frame after it has been reconstructed, and the filtered visual content may not be a source for prediction. An out-of-loop filter may interchangeably be referred to as a post-processing filter or a post-filter.

Neural networks may be used as post-filters and in-loop filters.

More than one NN may be available for performing decoding operation. When more than one NNs are available, an NN may need to be identified or addressed separately or explicitly (e.g. through IDs) so that a correct NN is used in a decoding operation.

The validity of a NN NAL unit may be defined similarly to parameter sets. A NN NAL unit should be available to the decoder before being referenced.

The NN may be signaled as part of a parameter set. For example, a new APS type may be defined for a video coding standard such as VVC. In other words, an NN NAL unit may be an adaptation parameter set NAL unit with an APS type indicating NN filtering. In an example embodiment, the following syntax may be used for an APS:

| adaptation_parameter_set_rbsp( ) { | Descriptor |
|---|---|
| aps_params_type | u(3) |
| aps_adaptation_parameter_set_id | u(5) |
| aps_chroma_present_flag | u(1) |
| if( aps_params_type = = ALF_APS ) | |
| alf_data( ) | |
| else if( aps_params_type = = LMCS_APS ) | |
| lmcs_data( ) | |
| else if( aps_params_type = = SCALING_APS ) | |
| scaling_list_data( ) | |
| else if( aps_params_type = = NN_APS ) | |
| nn_data( ) | |
| aps_extension_flag | u(1) |
| if( aps_extension_flag ) | |
| while( more_rbsp_data( ) ) | |
| aps_extension_data_flag | u(1) |
| rbsp_trailing_bits( ) | |
| } | |

NN_APS may be a pre-defined constant value, e.g. equal to 3.

nn_data( ) may comprise an NNR bitstream.

nn_data( ) may comprise syntax and semantics like those of the NNPFC SEI message, although it should be noticed that the syntax structures within nn_data( ) do not necessarily comply with the SEI message syntax.

nn_data( ) may comprise syntax and semantics comprising a combination of two NNPFC SEI messages, one for the base filter and another for a filter update, although it may be noted that the syntax structures within nn_data( ) do not necessarily comply with the SEI message syntax. In this embodiment, a the nn_data( ) may comprise one or both of a reference or an identifier, such as a URI, that identifies a (de-facto) standard neural network or a separately provided neural network, and an update of the identified neural network.

Video content commonly includes global motion, such as camera panning or zooming out. As a result of such global motion, a picture has content that did not appear in any previous pictures in the video sequence in output order. Predicting such appearing content with conventional intra or inter prediction may be suboptimal, since a prediction block may conventionally comprise samples obtained through a repetition of samples at the picture boundary of a reference picture. The examples described herein aim at improving the prediction of the content that appears the first time in a current picture due to global motion.

1.1 Embodiment applicable to both in-loop and encoder embodiments

A method comprises: forming an extended field-of-view (FOV) picture; deriving a prediction signal by using the extended-FOV picture; using the prediction signal to encode at least a part of a current source picture to a current coded picture or to decode at least a part of the current coded picture to a current reconstructed picture.

The extended-FOV picture covers a spatial area that is larger than the area that a decoder outputs. In some coding specifications, the area that a decoder outputs is called the conformance cropping window. The area that the decoder outputs may be identical to the displayed area.

In various embodiments, a core picture may be defined as the picture provided as input to the spatial extrapolation.

In an embodiment, forming the extended-FOV picture comprises performing an inference of a spatial extrapolation neural network with a core picture as input.

1.2 Summary of spatial extrapolation as an in-loop operation to extend reference picture(s) spatially

As used herein, the prefix "previous" in the phrases "previous source picture", "previous coded picture", and "previous reconstructed picture" is merely a qualifier that could be replaced by some other qualifier, such as "first". The previous picture precedes the current picture in (de)coding order but does not need to be the immediately preceding picture relative to the current picture. In other words, there may be pictures in between the previous picture and the current picture in (de)coding order. Similarly, the prefix "current" in the phrases "current source picture", "current coded picture", and "current reconstructed picture" is merely a qualifier that could be replaced by some other qualifier, such as "second".

In an embodiment, the method additionally comprises: encoding a previous source picture to a previous coded picture, wherein the encoding comprises reconstructing a previous reconstructed picture, or decoding the previous coded picture to the previous reconstructed picture; and treating the previous reconstructed picture as the core picture.

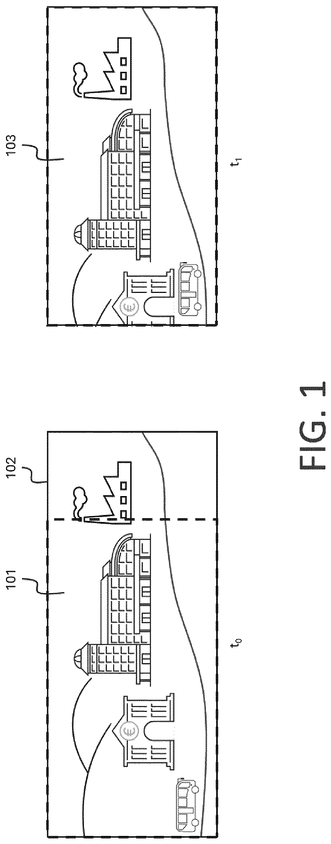

FIG. 1 shows an example of an embodiment for spatial extrapolation as an in-loop operation to extend reference picture(s) spatially. FIG. 1 presents an example where:

-- The previous reconstructed picture 101, which is treated as the core picture, comprises the area within the dashed rectangle in time $t_0$.

-- The current source picture or the current reconstructed picture 103 comprises the area within the solid rectangle in time $t_1$.

-- The camera has panned from time $t_0$ to time $t_1$,

-- The extended-FOV picture 102, which comprises the area within the solid rectangle in time $t_0$ is formed to cover the area corresponding to the extent of the panning, for example through a spatial extrapolation NN.

-- The extended-FOV picture 102 is used to derive a prediction signal that is used to encode the source picture of time $t_1$ or decode the coded picture of time $t_1$.

It is to be understood that the example illustrations might be misleading, since the depicted spatially extrapolated areas are perfect, i.e., represent the actual source or reconstructed video content exactly. In practice, the spatial extrapolation would not be exactly the same as the actual video content.

2.1 Options for forming the extended-FOV picture

In an embodiment, the method additionally comprises obtaining global motion, such as a camera pan or zoom; and forming of the extended-FOV picture comprises extending a core picture spatially according to the obtained global motion.

The global motion may comprise, but need not be limited to, one or more of the following: camera panning, which may be defined as swiveling a camera horizontally; camera tilting, which may be defined as rotating a camera up or down; camera rotation; zooming in or out; or moving the camera with respect to the scene.

In an embodiment, the global motion is obtained using one or more of the following: A global motion estimation method; A global disparity estimation method for multiview video, which may be applicable when the method is applied to pictures from different views of the same time instance; An engine generating the video content, such as a game engine or a rendering engine for computer-generated video content; Sensors attached to or integrated in the camera capturing the source video content. The sensors may for example include accelerometer, gyroscope, and/or magnetometer. The sensors may be intended to obtain e.g. one or more of the following: orientation; position; rotation direction, speed and/or acceleration; movement direction, speed and/or acceleration.

In an embodiment, forming of the extended-FOV picture comprises obtaining a source picture that has larger field of view than what is intended for decoder output or display. Methods for obtaining such a source picture may comprise, but may not be limited to, the following (1-2):

1. A camera sensor captures at a particular field of view, whereas a cropped version is intended for display. Use cases may include, but are not limited to, the following (i-iii): i) A handheld camera, where the examples described herein may, for example, compensate for shaking of the hand, ii) A large-FOV camera with a close-up picture chosen for displaying. For example, a talking person may be automatically detected and the close-up picture may automatically follow the movement of the talking person, or a change of talking persons, iii) A panoramic or omnidirectional camera or camera array with a viewport chosen for transmission and/or displaying.

2. A game engine generates an extended field of view of the game scene.

2.2 Determining pictures to be spatially extrapolated in an encoder

In an embodiment, an encoder extrapolates a core picture when it has obtained non-zero global motion between the core picture and the current source picture.

In an embodiment, an encoder extrapolates pictures with certain properties, which may be provided in an encoder configuration. For example, an encoder may spatially extrapolate IRAP pictures. In another example, an encoder may spatially extrapolate pictures at certain temporal sublayers only, for example pictures are temporal sublayer 0 only.

In an embodiment, an encoder detects a scene cut and extrapolates a core picture that starts a new scene.

2.3 Determining the amount of spatial extrapolation in an encoder

In an embodiment, an encoder extrapolates the core picture by a pre-defined or configured amount sample rows and sample columns.

In an embodiment, the method additionally comprises obtaining global motion, such as a camera pan or zoom; and forming of the extended-FOV picture comprises extending a core picture spatially according to the obtained global motion.

In an embodiment, an encoder obtains the global motion between the current source picture and the core picture and extrapolates the core picture by the sample rows and sample columns that cover the global motion.

In an embodiment, an encoder obtains the global motion between a selected source picture and the core picture and extrapolates the core picture by the sample rows and sample columns that cover the global motion. The selected source picture may, for example, be the next picture in decoding order that is spatially extrapolated.

In an embodiment, an encoder obtains the global motion from the core picture to each source picture in a sequence of source pictures. The sequence of source pictures may, for example, comprise pictures coded as a group of pictures. In another example, the sequence of source pictures comprises pictures up to but excluding the next picture in decoding order that is spatially extrapolated. The encoder extrapolates the core picture by the sample rows and sample columns that cover the global motion relative to each source picture in the sequence of source pictures.

2.4 Usage of scaling windows for indicating global motion

Without loss of generality, embodiments are described below with reference to scaling windows as specified in VVC. It is to be understood that similar means than scaling windows to indicate spatial correspondence between sample locations of pictures may be used to realize embodiments.

In an embodiment, an encoder indicates with scaling windows the spatial correspondence between the previous reconstructed picture and the current reconstructed picture.

In an embodiment, an encoder indicates the scaling window of the previous reconstructed picture to be the same as its conformance cropping window.

In an embodiment, an encoder indicates the scaling window of the current reconstructed picture to match the global motion from the previous reconstructed picture to the current reconstructed picture.

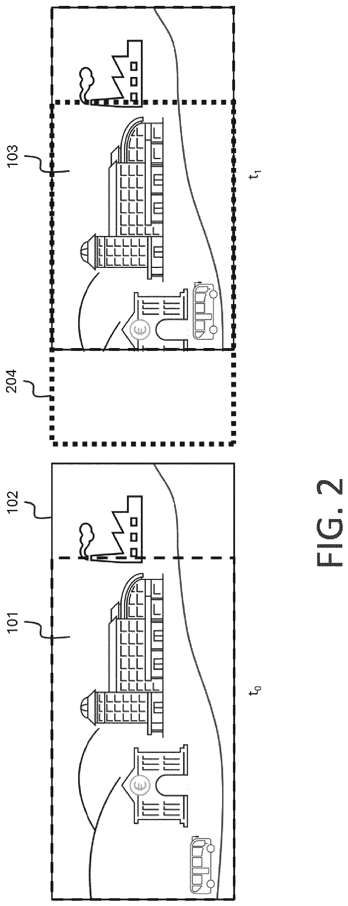

FIG. 2 shows usage of scaling windows for the example of FIG. 1. In particular, FIG. 2 illustrates how scaling windows may be used for the example of FIG. 1 and is described as follows:

-- The scaling window of the previous reconstructed picture 101 is set equal to its conformance cropping window, i.e., covering exactly the previous reconstructed picture 101 in this example. The dashed rectangle indicates the scaling window at time $t_0$.

-- The scaling window 204 of the current reconstructed picture 103 is set to match the global motion between the previous and current reconstructed pictures. The dotted rectangle indicates the scaling window at time $t_1$.

-- In this example, the camera pans and the respective extents of the two scaling windows are the same. Hence, the collocated positions within the two scaling windows approximately correspond to the same pixel in the content, provided that the pixel did not change between from the previous reconstructed picture to the current reconstructed picture.

2.5 Signaling for the in-loop spatial extrapolation

In an embodiment, an encoder indicates, e.g. in a sequence-level syntax structure, such as an SPS, whether in-loop spatial extrapolation according to any other embodiment(s) is enabled, i.e., may be used by an encoder. Without loss of generality, this indication may be referred to as sps_spatial_extrapolation_enabled_flag. When sps_spatial_extrapolation_enabled_flag is equal to 1, in-loop spatial extrapolation according to any other embodiment(s) is enabled. When sps_spatial_extrapolation_enabled_flag is equal to 0, in-loop spatial extrapolation according to any other embodiment(s) is disabled.

In an embodiment, an encoder sets sps_spatial_extrapolation_enabled_flag equal to 1 when it is capable of forming an extended field-of-view (FOV) picture, deriving a prediction signal by using the extended-FOV picture, and using the prediction signal to code at least a part of a current source picture to a current coded picture.

In an embodiment, an encoder indicates, e.g. in a picture-level syntax structure, such as a PPS or a picture header, whether in-loop spatial extrapolation according to any other embodiment(s) is in use. Without loss of generality, this indication may be referred to as pps_spatial_extrapolation_flag. When pps_spatial_extrapolation_flag is equal to 1, in-loop spatial extrapolation according to any other embodiment(s) is in use for the picture corresponding to the containing syntax structure. When pps_spatial_extrapolation_flag is equal to 0, in-loop spatial extrapolation according to any other embodiment(s) is not in use for the picture corresponding to the containing syntax structure. The presence of pps_spatial_extrapolation_flag may be conditional on sps_spatial_extrapolation_enabled_flag being equal to 1.

In an embodiment, in-loop spatial extrapolation according to any other embodiment(s) is in use, an encoder indicates one or more syntax elements controlling the in-loop spatial extrapolation. In an embodiment, an encoder indicates four syntax elements, which, without loss of generality, may be referred to as pps_spatial_extrapolation_top_cnt, pps_spatial_extrapolation_bottom_cnt, pps_spatial_extrapolation_left_cnt, and pps_spatial_extrapolation_right_cnt, indicative of the count of sample rows or columns extrapolated above, below, to the left of, and to the right of, respectively, the core picture.

The units of indicating pps_spatial_extrapolation_top_cnt, pps_spatial_extrapolation_bottom_cnt, pps_spatial_extrapolation _left_cnt, and pps_spatial_extrapolation_right_cnt may depend on the chroma format. For example, pps_spatial_extrapolation_top_cnt and pps_spatial_extrapolation_bottom_cnt may be indicated in units of SubHeightC luma sample rows, and pps_spatial_extrapolation_left_cnt and pps_spatial_extrapolation_right_cnt may be indicated in units of SubWidthC luma sample columns, where SubHeightC and SubWidthC are derived from the chroma format as follows:

| Chroma format | SubWidth C | SubHeight C |
|---|---|---|
| Monochrome | 1 | 1 |
| 4:2:0 | 2 | 2 |
| 4:2:2 | 2 | 1 |
| 4:4:4 | 1 | 1 |

In an embodiment, sps_spatial_extrapolation_enabled_flag equal to 1 implies that scaling windows are used in determining if in-loop spatial extrapolation is in use as follows:

-- Let the top-left and bottom-right sample positions of the current reconstructed picture be scaled according to the scaling windows of the current reconstructed picture and the previous reconstructed picture, resulting into coordinates ( $tl_x$, $tl_y$ ) and ( $br_x$, $br_y$ ).

-- If ( $tl_x$, $tl_y$ ) or ( $br_x$, $br_y$ ) is outside of the previous reconstructed picture, in-loop spatial extrapolation is in use. Otherwise, in-loop spatial extrapolation is not in use.

In an embodiment, the spatial extrapolation NN for in-loop operation is pre-defined, e.g. in a standard.

In an embodiment, a set of spatial extrapolation NNs for in-loop operation are pre-defined, e.g. in a standard. An encoder encodes an identifier, such as an index, in or along a bitstream identifying which spatial extrapolation NN from the set is in use. A decoder decodes an identifier, such as an index, from or along a bitstream identifying which spatial extrapolation NN from the set is in use.

In an embodiment, an encoder encodes a representation or an identifier of a spatial extrapolation NN in or along a bitstream. For example, an encoder may encode an NNR bitstream defining a NN or a URI identifying a NN into an APS whose type (e.g., aps_params_type in the APS syntax of VVC) indicates spatial extrapolation. An encoder may indicate, e.g. in a picture-level syntax structure, which spatial extrapolation APS is in use.

In an embodiment, a decoder decodes a representation or an identifier of a spatial extrapolation NN from or along a bitstream. For example, a decoder may decode an NNR bitstream defining a NN or a URI identifying a NN from an APS whose type (e.g., aps_params_type in the APS syntax of VVC) indicates spatial extrapolation. A decoder may decode, e.g. from a picture-level syntax structure, which spatial extrapolation APS is in use.

In an embodiment, an encoder encodes a representation or an identifier of an update of a spatial extrapolation NN in or along a bitstream. For example, an encoder may encode an NNR bitstream defining a NN update or a URI identifying a NN update into an APS whose type (e.g., aps_params_type in the APS syntax of VVC) indicates spatial extrapolation. The update may be relative to an identified pre-defined spatial extrapolation NN. Alternatively, the update may be relative to a spatial extrapolation NN whose representation or identification is present earlier in decoding order.

In an embodiment, a decoder decodes a representation or an identifier of an update of a spatial extrapolation NN from or along a bitstream. For example, a decoder may decode an NNR bitstream defining a NN update or a URI identifying a NN update from an APS whose type (e.g., aps_params_type in the APS syntax of VVC) indicates spatial extrapolation. The update may be relative to an identified pre-defined spatial extrapolation NN. Alternatively, the update may be relative to a spatial extrapolation NN whose representation or identification is present earlier in decoding order.

2.6 Spatial extrapolation as an in-loop operation to extend reference picture(s) spatially

In an embodiment, the method comprises: encoding a previous source picture to a previous coded picture, wherein the encoding comprises reconstructing a previous reconstructed picture (e.g., 101 in FIG. 1); forming the extended-FOV picture (e.g., 102 in FIG. 1) by performing an inference of a spatial extrapolation neural network with the previous reconstructed picture as input; deriving a prediction signal by using the extended-FOV picture; using the prediction signal to encode at least a part of a current source picture to a current coded picture wherein the encoding comprises reconstructing a current reconstructed picture (e.g., 103 in FIG. 1).

In an embodiment, the method comprises: decoding a previous coded picture to a previous reconstructed picture (e.g., 101 in FIG. 1); decoding an indication that the previous reconstructed picture is spatially extrapolated; forming the extended-FOV picture (e.g., 102 in FIG. 1) by performing an inference of a spatial extrapolation neural network with the previous reconstructed picture as input; deriving a prediction signal by using the extended-FOV picture; using the prediction signal to decode at least a part of a current coded picture to a current reconstructed picture (e.g., 103 in FIG. 1).

Embodiments described in sections 2.1, 2.2, 2.3, 2.4, and 2.5 may be used together with the embodiments of this section.

In an embodiment, an encoder encodes an indication in or along the current coded picture whether the extended-FOV picture or the previous reconstructed picture is used as a reference picture. In an embodiment, a decoder decodes an indication from or along the current coded picture whether the extended-FOV picture or the previous reconstructed picture is used as a reference picture. The indication may be present in a picture-level syntax structure (such as a picture header or PPS), in a slice-level syntax structure (such a slice header), and/or in a block-level syntax structure (such as a coding tree unit syntax structure or a coding unit syntax structure). The indication may apply when the reference index that indicates the previous reconstructed picture is used in inter prediction.

In an embodiment, both the extended-FOV picture and the previous reconstructed picture are included in a reference picture list by an encoder and/or a decoder. In an embodiment, the extended-FOV picture is included in a pre-defined position in a reference picture list, such as the first position in the reference picture list. In another embodiment, the position of the extended-FOV picture in a reference picture list is indicated in and/or decoded from a reference picture list syntax structure. In yet another embodiment, the position of the extended-FOV picture in a reference picture list is pre-defined in relation to the previous reconstructed picture, such as the next position relative to the previous reconstructed picture or the previous position relative to the previous reconstructed picture.

In an embodiment, the method additionally comprises: decoding one or more syntax elements controlling the in-loop spatial extrapolation.

In an embodiment, the method additionally comprises: decoding pps_spatial_extrapolation_top_cnt, pps_spatial_extrapolation_bottom_cnt, pps_spatial_extrapolation_left_cnt, and pps_spatial_extrapolation_right_cnt, indicative of the count of sample rows or columns extrapolated above, below, to the left of, and to the right of, respectively, the previous reconstructed picture; performing an inference of a spatial extrapolation neural network with inputs being the previous reconstructed picture and the count of sample rows or columns extrapolated above, below, to the left of, and to the right of, respectively, the previous reconstructed picture.

In an embodiment, the method additionally comprises: decoding the scaling window of the current reconstructed picture in a decoder, or determining the scaling window of the current reconstructed picture in an encoder; inferring the count of sample rows or columns extrapolated above, below, to the left of, and to the right of the previous reconstructed picture to cover an area that matches the area within the current reconstructed picture that is not enclosed by the scaling window of the current reconstructed picture. For example, referring the FIG. 1 or FIG. 2, this area is within the solid rectangle of time $t_0$ and to right of the dashed rectangle; performing an inference of a spatial extrapolation neural network with inputs being the previous reconstructed picture and the count of sample rows or columns extrapolated above, below, to the left of, and to the right of, respectively, the previous reconstructed picture.

2.7 Spatial extrapolation as an in-loop operation to form prediction of slice(s) of the current picture

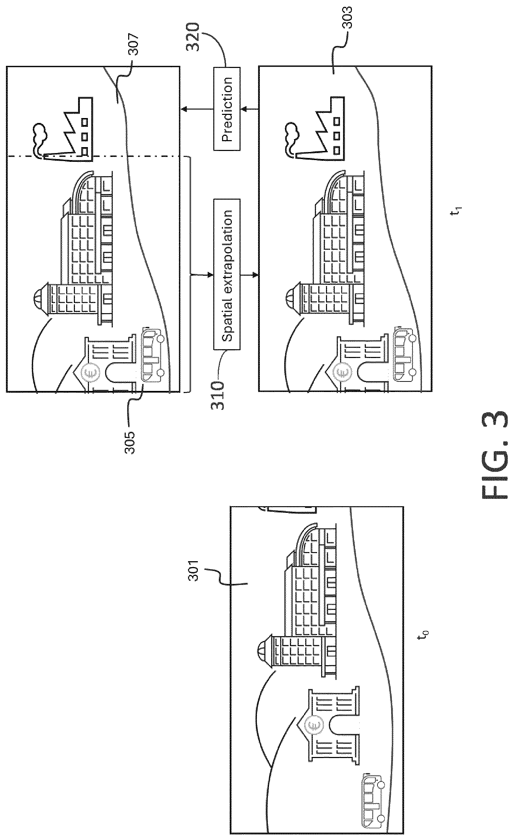

In an embodiment, the method comprises: encoding a first area of a current source picture to a first set of slices of a current coded picture, wherein the encoding comprises reconstructing a core picture (e.g., 305 in FIG. 3); forming the extended-FOV picture (e.g., 303 in **Error! Reference source not found.)** by performing an inference of a spatial extrapolation neural network (310) with the core picture 305 as input; deriving a prediction signal (320) by using the extended-FOV picture 303; using the prediction signal to encode a second area of the current source picture to a second set of slices of the current coded picture wherein the encoding comprises reconstructing a reconstructed second area (e.g., 307 in FIG. 3); and reconstructing a current reconstructed picture ((e.g., 305 and 307 collectively in FIG. 3) from the core picture 305 and the reconstructed second area 307.

In an embodiment, the method additional comprises: encoding a previous source picture to a previous coded picture, wherein the encoding comprises reconstructing a previous reconstructed picture (e.g., 301 in FIG. 3).

Thus, FIG. 3 shows an example of spatial extrapolation as an in-loop operation to form prediction of slice(s) of the current picture. In particular, FIG. 3 presents an example where:

-- The previous reconstructed picture 301 is enclosed in the solid rectangle of time $t_0$.

-- The core picture 305 is the area enclosed by the solid rectangle and not crossing the dash-dot line at time $t_1$.

-- The extended-FOV picture 303 is formed by spatial extrapolation from the core picture 305.

-- The extended-FOV picture 303 is used to derive a prediction signal for predicting the second set of slices, which are reconstructed to the reconstructed second area 307 of the current reconstructed picture.

In an embodiment, the method comprises: decoding a first set of slices of a current coded picture to a core picture (e.g., 305 in FIG. 3); forming the extended-FOV picture (e.g., 303 in FIG. 3) by performing an inference of a spatial extrapolation neural network (310) with the core picture 305 as input; deriving a prediction signal (320) by using the extended-FOV picture 303; using the prediction signal 320 to decode a second set of slices of the current coded picture to a reconstructed second area (e.g., 307 in FIG. 3); and reconstructing a current reconstructed picture ((e.g., 305 and 307 collectively in FIG. 3) from the core picture 305 and the reconstructed second area 307.

In an embodiment, the method additional comprises: decoding a previous coded picture to a previous reconstructed picture (e.g., 301 in FIG. 3).

Embodiments described in sections 2.1, 2.2, 2.3, 2.4, and 2.5 may be used together with the embodiments of this section.

In an embodiment, the extended-FOV picture comprises only the extended area excluding the area of the core picture. A scaling window may be inferred for the extended-FOV picture so that the spatial correspondence of the extended-FOV picture to the current reconstructed picture is maintained.

In an embodiment, when one or more boundaries of the first area are not aligned with a coding tree unit (CTU) grid of the current source picture, the encoder may extend or shrink the first area to be aligned with the CTU grid. Consequently, a first set of slices is formed along to form a set of complete CTUs.

In an embodiment, when one or more boundaries of the first area are not aligned with a coding tree unit (CTU) grid of the current source picture, the encoder may align the current source picture relative to the current reconstructed picture so that the boundaries of the first area are aligned with the CTU grid in the current reconstructed picture. Consequently, a first set of slices is formed from a set of complete CTUs. The encoder may need to add sample columns and/or sample rows to the current source picture to make the top sample row and the left-most sample column of the current source picture to be aligned with the CTU grid in the current reconstructed picture.

Scaling windows may be used as described in Section 2.4.

In an embodiment, when the in-loop spatial extrapolation is in use, it is inferred in an encoder and/or a decoder that the (de)coding order of tiles is such that the tiles within the scaling window in the current picture are (de)coded prior to (de)coding the tiles outside of the scaling window.

In an embodiment, when the in-loop spatial extrapolation is in use, it is inferred in an encoder and/or a decoder that the (de)coding order of slices is such that the slices within the scaling window in the current picture are (de)coded prior to (de)coding the slices outside of the scaling window.

In an embodiment, when the in-loop spatial extrapolation is in use, one or more of the following are inferred in an encoder and/or a decoder:

-- When the top boundary of the scaling window is within the current picture, there is a horizontal tile boundary aligned with the top boundary of the scaling window.

-- When the bottom boundary of the scaling window is within the current picture, there is a horizontal tile boundary aligned with the bottom boundary of the scaling window.

-- When the left boundary of the scaling window is within the current picture, there is a vertical tile boundary aligned with the left boundary of the scaling window.

-- When the right boundary of the scaling window is within the current picture, there is a vertical tile boundary aligned with the right boundary of the scaling window.

The tile boundary signaling may be present e.g. in a PPS, for example using the following VVC syntax:

| | |
|---|---|
| **pps_num_exp_tile_columns_minus1** | ue(v) |
| **pps_num_exp_tile_rows_minus1** | ue(v) |
| for( i = 0; i <= pps_num_exp_tile_columns_minus1; i++ ) | |
|     **pps_tile_column_width_minus1**[ i ] | ue(v) |
| for( i = 0; i <= pps_num_exp_tile_rows_minus1; i++ ) | |
|     **pps_tile_row_height_minus1**[ i ] | ue(v) |

In an embodiment, when any tile boundaries are inferred, an encoder omits the signaling of an inferred tile boundary from the tile boundary signaling.

In an embodiment, when any tile boundaries are inferred, an encoder signals the inferred tile boundaries in the tile boundary signaling and ensures that the signaled tile boundaries include the inferred tile boundaries.

In an embodiment, an encoder may indicate and/or a decoder may decode per-tile indications whether a tile is within the core picture. Without loss of generality, the indication may be referred to as pps_tile_in_core_pic_flag[ i ], where i is a tile index (e.g., in raster-scan order of tiles), value 1 specifies that the tile is in the core picture, and value 0 specifies that the tile is outside of the core picture. In example, the following syntax may be used where NumTilesInPic is the count of tiles in the current coded picture:

| | |
|---|---|
| for( i = 0; i < NumTilesInPic; i++ ) | |
|     **pps_tile_in_core_pic_flag**[ i ] | u(1) |

In an embodiment, when the in-loop spatial extrapolation is in use, an encoder indicates if slices are formed according to the scaling window. Without loss of generality, this indication may be referred to as pps_single_slice_in_scaling_win_flag. When pps_single_slice_in_scaling_win_flag is equal to 1, the scaling window encloses a complete single slice and does not contain any content of any other slices. When pps_single_slice_in_scaling_win_flag is equal to 0, the scaling window may enclose more than one slice.

In an embodiment, when pps_single_slice_in_scaling_win_flag is equal to 1, the signaling and/or parsing of slice boundaries, which may be present e.g. in a PPS, is skipped. This skipping may be realized, for example, with the following VVC syntax excerpt of the PPS syntax structure where the added condition is indicated by *"&& !pps_single_slice_in_scaling_win_flag"*:

| | |
|---|---|
| if( pps_rect_slice_flag && !pps_single_slice_per_subpic_flag    *&& !pps_single_slice_in_scaling_win_flag*) { | |
|     **pps_num_slices_in_pic_minus1** | ue(v) |

(continued)

| | |
|---|---|
| if( pps num slices_in_pic_minus1 > 1 ) | |
| **pps_tile_idx_delta_present_flag** | u(1) |
| for( i = 0; i < pps_num_slices_in_pic_minus1; i++ ) { | |
| if( SliceTopLeftTileIdx[ i ] % NumTileColumns != NumTileColumns - 1 ) | |
| **pps_slice_width_in_tiles_minus1**[ i ] | ue(v) |
| if( SliceTopLeftTileIdx[ i ] / NumTileColumns != NumTileRows - 1 && <br> (pps _tile idx delta present flag \|\| <br> SliceTopLeftTileIdx[ i ] % NumTileColumns = = 0 ) ) | |
| **pps_slice_height_in_tiles_minus1**[ i ] | ue(v) |
| if( pps_slice_width_in_tiles_minus1[ i ] = = 0 && <br> pps_slice_height_in_tiles_minus1[ i ] = = 0 && <br> RowHeightVal[ SliceTopLeftTileIdx[ i ] / NumTileColumns ] > 1 ) { | |
| **pps_num_exp_slices_in_tile**[ i ] | ue(v) |
| for( j = 0; j < pps_num_exp_slices_in_tile[ i ]; j++ ) | |
| **pps_exp_slice_height_in_ctus_minus1**[ i ][ j ] | ue(v) |
| i += NumSlicesInTile[ i ] - 1 | |
| } | |
| if( pps_tile_idx_delta_present_flag && i < pps_num_slices_in_pic_minus1 ) | |
| **pps_tile_idx_delta_val**[ i ] | se(v) |
| } | |
| } | |

In an embodiment, when pps_single_slice_in_scaling_win_flag is equal to 1, the allocation of tiles that are outside the scaling window to slice(s) is performed using a first pre-defined algorithm. The first pre-defined algorithm may investigate tiles of the current picture in a pre-defined scan order, such as the raster-scan order (i.e., the row-major order). When the current tile in the scan order in tile grid position $(x_1, y_1)$ is not enclosed by any slice, a new slice is inferred with extents that are inferred according a second pre-defined algorithm. The second pre-defined algorithm may investigate tiles of the current picture in a pre-defined scan order, such as:

-- Determine the number of tiles h below the current tile that are not enclosed by any slice so far.

-- Include the tiles at tile grid positions $(x_1, y_1)$ .. $(x_1, y_1 + h - 1)$ to the new slice

-- Proceed tile-column wise with increasing relative index i to the right to investigate if all tiles at tile grid positions $(x_1 + i, y_1)$ .. $(x_1 + i, y_1 + h - 1)$ are enclosed by any slice so far: If all these tiles are not enclosed by any slice so far, include the tiles at tile grid positions $(x_1 + i, y_1)$ .. $(x_1 + i, y_1 + h - 1)$ to the new slice; If at least one of these tiles is enclosed by a slice, exit the second pre-defined algorithm.

In an embodiment, when the in-loop spatial extrapolation is in use and there are per-tile indications whether a tile is within the core picture, an encoder indicates if slices are formed according to the per-tile indications. Without loss of generality, this indication may be referred to as pps_single_slice_in_core_pic_flag. When pps_single_slice_in_core_pic_flag is equal to 1, the tiles indicated to be in the core picture form a complete single slice. When pps_single_slice_in_core_pic_flag is equal to 0, more than one complete slices may be formed for the core picture. In an embodiment, when pps_single_slice_in_core_pic_flag is equal to 1, the signaling and/or parsing of slice boundaries, which may be present e.g. in a PPS, is skipped, which may be realized similarly to what is presented above for pps_single_slice_in_scaling_win_flag. In an embodiment, the allocation of tiles that are outside the core picture to slice(s) may be performed similarly to the above-presented description of the allocation of tiles that are outside the scaling window to slice(s).

Using the prediction signal derived from the extended-FOV picture for encoding and/or decoding may be realized with, but may not be limited to, any of the following embodiments:

-- In an embodiment, the extended-FOV picture is regarded as a long-term reference picture in encoding and/or decoding similarly to an inter-layer reference picture. In an embodiment, the extended-FOV picture is included in a pre-defined position in a reference picture list, such as the first position in the reference picture list. In another embodiment, the position of the extended-FOV picture in a reference picture list is indicated in and/or decoded from a reference picture list syntax structure. In an embodiment, when the extended-FOV picture is referenced in inter prediction (e.g., through its reference index), a zero motion vector is implied and syntax element(s) for indicating a motion vector are omitted. In another embodiment, when the extended-FOV picture is referenced in inter prediction, an encoder sets the syntax element(s) for indicating a motion vector so that the resulting motion vector is zero.

-- In an embodiment, spatial extrapolation is regarded as a prediction mode in addition to intra and inter prediction modes. An encoder may indicate and/or a decoder may decode the use of the spatial extrapolation prediction mode e.g. per a coding unit or prediction unit.

-- In an embodiment, spatial extrapolation is regarded as a sub-mode of the intra prediction mode. An example of another sub-mode for the intra prediction mode is intra block copy in VVC. An encoder may indicate and/or a decoder may decode the use of the spatial extrapolation prediction sub-mode e.g. per a coding unit or prediction unit.

2.8 Spatial extrapolation as encoder operation to extend reference picture(s) spatially

The embodiments presented in this section may be applied with any video codec that support scaling windows or alike, such as VVC.

The example illustrated in FIG. 1 applies as follows:

-- An encoder obtains a previous source picture, which is treated as the core picture. The previous source picture or the respective region in the previous reconstructed picture may be illustrated as the area in the dashed rectangle 101 at time $t_0$ in FIG. 1.

-- The encoder forms the extended-FOV picture from the previous source picture. The extended-FOV picture or the previous reconstructed picture may be illustrated as the area in the solid rectangle 102 at time $t_0$ in FIG. 1.

-- The encoder encodes the extended-FOV picture to a previous coded picture. As a part of the encoding, the encoder reconstructs the previous reconstructed picture. The conformance cropping window of the previous reconstructed picture is illustrated with the dashed rectangle at time $t_0$.

-- The encoder encodes a current source picture to a current coded picture. As a part of the encoding, the encoder reconstructs a current reconstructed picture. The current source picture or the current reconstructed picture may be illustrated as the picture at time $t_1$.

In an embodiment, the method additionally comprises: obtaining a previous source picture; forming the extended-FOV picture from the previous source picture; encoding the extended-FOV picture, wherein the encoding comprises reconstructing a previous reconstructed picture; and deriving the prediction signal from the previous reconstructed picture.

Embodiments described in sections 2.1, 2.2, 2.3, and 2.4 may be used together with the embodiments of this section.

In an embodiment, which may be applied instead of or in combination with one or more embodiments described in section 2.1, the extended-FOV picture may be formed using multiple source pictures. For example, a spatial extrapolation NN may take additional pictures as input in addition to the previous source picture. In another example, any background sprite generation algorithm may be applied with multiple pictures as input.

In an embodiment, an encoder includes an SEI message in or along a bitstream to indicate that the previous reconstructed picture includes spatially extrapolated area(s). In an embodiment, a decoder decodes an SEI message from or along a bitstream to conclude that the previous reconstructed picture includes spatially extrapolated area(s).

In an embodiment, the SEI message in the embodiments above is the encoder optimization information SEI message, which is under development for version 4 of the VSEI standard, the latest version being available in JVET-AH2006 at the time of writing this document.

In an embodiment, a spatial extrapolation optimization type is added to the eoi_type syntax element of the encoder optimization information SEI message. eoi_type indicates the types of optimization method as specified in the table below where ( eoi_type & bitMask ) not equal to 0 indicates that the optimization type with the bitMask value in the table has been applied. When eoi_type is greater than 0 and ( eoi_type & bitMask ) is equal to 0, the optimization type with the bitMask value has not been applied. When eoi_type is equal to 0, optimization as determined by the application has been used. For example, the bitMask value 0x40 may be specified for the spatial extrapolation optimization type. In an example, the spatial extrapolation optimization type may be defined as follows, but it is to be understood that any phrasing indicating a similar optimization operation may be used.

| bitMask | Interpretation |
|---------|----------------|
| 0x01 | Object-based optimization; the pictures for which this SEI message persists have been pre-processed or encoded so that detected objects in the pictures are optimized with respect to other parts of the pictures for the indicated optimization purposes |
| 0x02 | Temporal resampling optimization |
| 0x04 | Spatial resampling optimization |
| 0x08 | Temporal quality optimization in a manner that quality fluctuates temporally |
| 0x10 | Spatial quality optimization; the pictures for which this SEI message persists have been pre-processed or encoded to reduce unnecessary information or improve the quality of necessary information.(e.g. to reduce the amount of noise and remove speckles at the picture-level) |
| 0x20 | Privacy protection optimization; the pictures for which this SEI message persists have been pre-processed or encoded to protect personal information. (e.g. removal or replacing of personal identifiable information, pseudonymization, anonymization) |
| 0x40 | Spatial extrapolation optimization; the pictures for which this SEI message persists contain such samples outside the conformance cropping window that may be appropriate as reference for inter prediction |

In an embodiment, when the spatial extrapolation optimization type is indicated in the SEI message, the SEI message may comprise information characterizing the spatially extrapolated picture (e.g., in relation to the picture content within the conformance cropping window). In an embodiment, a syntax element is encoded in, and/or decoded from, SEI message, wherein the syntax element is indicative of how the source pictures for encoding the picture for which this SEI message persists were obtained. Possible values of the syntax element may include, but may not be limited to, one or more of the following:

-- A spatial extrapolation neural network was used to extend a source picture.

-- A source picture contained a larger field of view than what is indicated by the conformance cropping window.

In an embodiment, when the spatial extrapolation optimization type is indicated in the SEI message, the SEI message may comprise information indicative of the boundaries of the core picture (i.e., the area that has not been extrapolated). In an embodiment, the SEI message comprises a flag indicative whether the conformance cropping window defines the area that has not been extrapolated. In an embodiment, the SEI message comprises a flag indicative whether the scaling window defines the area that has not been extrapolated. In an embodiment, the SEI message comprises syntax elements similar to pps_spatial_extrapolation_top_cnt, pps_spatial_extrapolation_bottom_cnt, pps_spatial_extrapolation_left_cnt, and pps_spatial_extrapolation_right_cnt described above, which are indicative of the count of sample rows or columns outside of the core picture.

In an embodiment, the spatial extrapolation NN inputs additional information, such as text prompts. For in-loop spatial extrapolation NN, an encoder may encode spatial extrapolation control (SEC) information in or along the bitstream, and a decoder may decode SEC information from or along the bitstream.

In an embodiment, the SEC information may comprise information indicative of characteristics of the text, such as one or more of the following:

- Whether the NN accepts or requires raw text;

- Whether the NN accepts or requires tokens (e.g., words, or parts of words, or indexes of a dictionary where an index is associated to a respective word or part of word);

- Whether the NN accepts or requires text embeddings, e.g., features extracted from the raw text or from tokens;

- Which tokenizer to use;

- Which text embedder to use;

- Timing of the text provided as input in relation to picture(s) to be extrapolated.

In an embodiment, the in-loop spatial extrapolation NN involves variability achieved through a pseudo-random number generator, and the SEC information comprises a seed value to be used for a pseudo-random number generator.

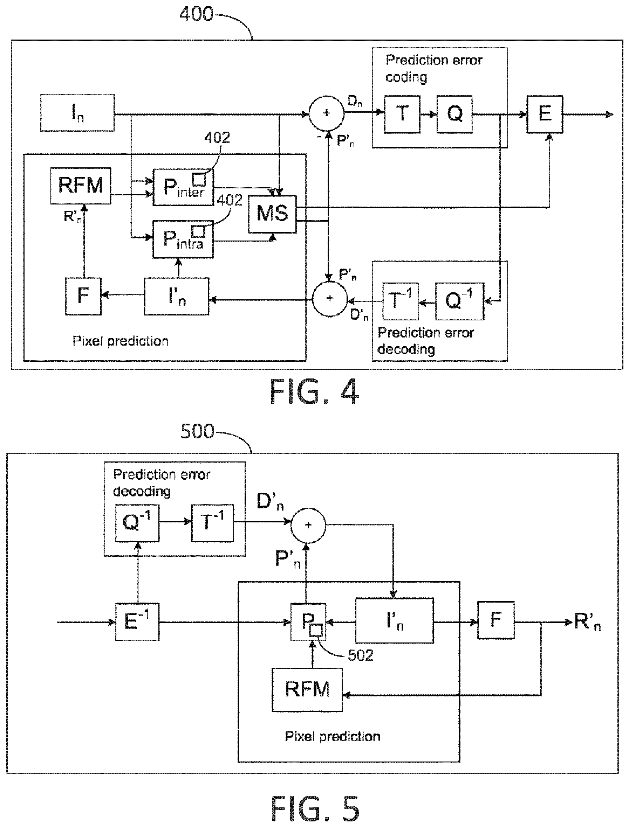

FIG. 4 shows an encoder 400 according to an embodiment. FIG. 4 illustrates an image to be encoded (I''), a predicted representation of an image block ($P'_n$), a prediction error signal (D''), a reconstructed prediction error signal ($D'_n$), a preliminary reconstructed image ($I'_n$), a final reconstructed image ($R'_n$), a transform (T) and inverse transform ($T^{-1}$), a quantization (Q) and inverse quantization ($Q^{-1}$), entropy encoding (E), a reference frame memory (RFM), inter prediction ($P_{inter}$), intra prediction ($P_{intra}$), mode selection (MS) and filtering (F). Spatial extrapolation as predictor 402 implements the examples described herein related to spatial extrapolation as a predictor in video coding. Spatial extrapolation as predictor 402 may be implemented within either inter prediction ($P_{inter}$) or intra prediction ($P_{intra}$), or within both of inter prediction ($P_{inter}$) and intra prediction ($P_{intra}$).

FIG. 5 shows a decoder 500 according to an embodiment. FIG. 5 illustrates a predicted representation of an image block ($P'_n$), a reconstructed prediction error signal ($D'_n$), a preliminary reconstructed image ($I'_n$), a final reconstructed image ($R'_n$), an inverse transform ($T^{-1}$), an inverse quantization ($Q^{-1}$), an entropy decoding ($E^1$), a reference frame memory (RFM), a prediction (either inter or intra) (P), and filtering (F). Spatial extrapolation as predictor 502 implements the examples described herein related to spatial extrapolation as a predictor in video coding. Spatial extrapolation as predictor 502 may be implemented within prediction (either inter or intra) (P).

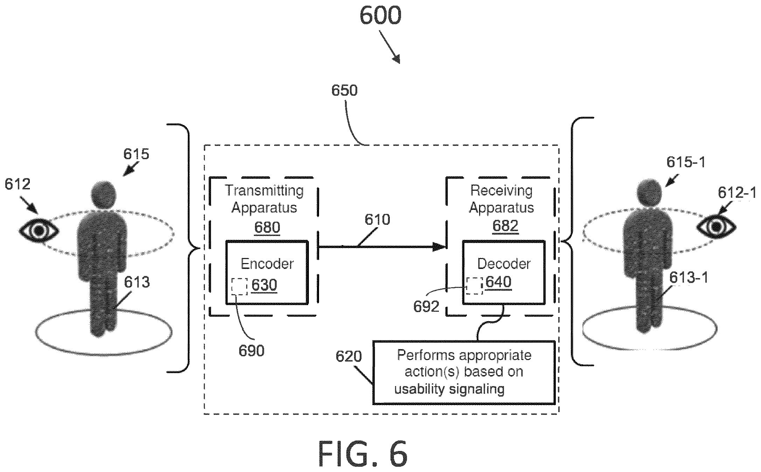

FIG. 6 is a block diagram illustrating a system 600 in accordance with several examples. In an example, the encoder 630 is used to encode an image or video from the scene 615, and the encoder 630 is implemented in a transmitting apparatus 680. The encoder 630 produces a bitstream 610 comprising signaling that is received by the receiving apparatus 682, which implements a decoder 640. The encoder 630 sends the bitstream 610 that comprises the herein described signaling. The decoder 640 forms the image or video for the scene 615-1, and the receiving apparatus 682 would present this to the user, e.g., via a smartphone, television, or projector among many other options.

In some examples, the transmitting apparatus 680 and the receiving apparatus 682 are at least partially within a common apparatus, and for example are located within a common housing 650. In other examples the transmitting apparatus 680 and the receiving apparatus 682 are at least partially not within a common apparatus and have at least partially different housings. Therefore in some examples, the encoder 630 and the decoder 640 are at least partially within a common apparatus, and for example are located within a common housing 650. For example the common apparatus comprising the encoder 630 and decoder 640 implements a codec. In other examples the encoder 630 and the decoder 640 are at least partially not within a common apparatus and have at least partially different housings, but when together still implement a codec.

In some examples, 3D media from the capture (e.g., volumetric capture) at a viewpoint 612 of the scene 615, which includes a person 613) is converted via projection to a series of 2D representations with occupancy, geometry, attributes and/or displacements. Additional atlas information is also included in the bitstream to enable inverse reconstruction. For decoding, the received bitstream 610 is separated into its components with atlas information; occupancy, geometry, displacement, and attribute 2D representations. A 3D reconstruction is performed to reconstruct the scene 615-1 created looking at the viewpoint 612-1 with a "reconstructed" person 613-1. The "-1" are used to indicate that these are reconstructions of the original. As indicated at 620, the decoder 640 performs an action or actions based on the received signaling.

Encoding 690 performs the examples described herein related to spatial extrapolation as a predictor, including encoding signaling elements. Decoding 692 performs the examples described herein related to spatial extrapolation as a predictor, including decoding signaling elements.

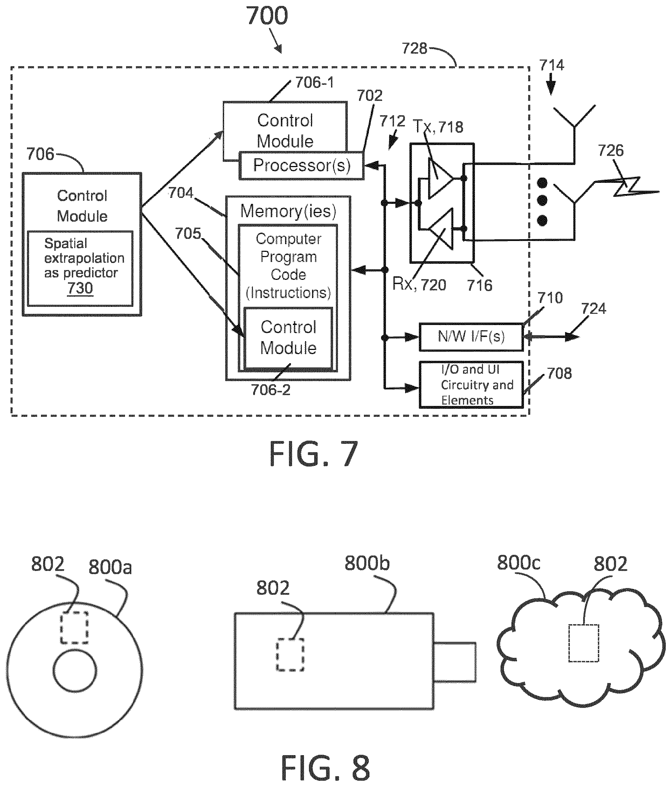

FIG. 7 is an example apparatus 700, which may be implemented in hardware, configured to implement the examples described herein. The apparatus 700 comprises at least one processor 702 (e.g., an FPGA and/or CPU and/or GPU), one or more memories 704 including computer program code 705, the computer program code 705 having instructions to carry out the methods described herein, wherein the at least one memory 704 and the computer program code 705 are configured to, with the at least one processor 702, cause the apparatus 700 to implement circuitry, a process, component, module, or function (implemented with control module 706) to implement the examples described herein.

Apparatus 700 may be a smartphone, personal digital device or assistant, smart television, laptop, pad, tablet, head-mounted display (HMD), or other user device or terminal device. The memory 704 may be a non-transitory memory, a transitory memory, a volatile memory (e.g. RAM), or a non-volatile memory (e.g., ROM).

Spatial extrapolation as predictor 730 implements the examples described herein related to spatial extrapolation as a predictor in video coding, including the herein described signaling.

The apparatus 700 includes a display and/or I/O interface 708, which includes user interface (UI) circuitry and elements, that may be used to display features or a status of the methods described herein (e.g., as one of the methods is being performed or at a subsequent time), or to receive input from a user such as with using a keypad, camera, touchscreen, touch area, microphone, biometric recognition, one or more sensors, etc. The apparatus 700 includes one or more communication e.g. network (N/W) interfaces (I/F(s)) 710. The communication I/F(s) 710 may be wired and/or wireless and communicate over the Internet/other network(s) via any communication technique including via one or more links 724. The communication I/F(s) 710 may comprise one or more transmitters or one or more receivers.

The transceiver 716 comprises one or more transmitters 718 and one or more receivers 720. The transceiver 716 and/or communication I/F(s) 710 may comprise standard well-known components such as an amplifier, filter, frequency-converter, (de)modulator, and encoder/decoder circuitries and one or more antennas, such as antennas 714 used for communication over wireless link 726.

The control module 706 of the apparatus 700 comprises one of or both parts 706-1 and/or 706-2, which may be implemented in a number of ways. The control module 706 may be implemented in hardware as control module 706-1, such as being implemented as part of the one or more processors 702. The control module 706-1 may be implemented also as an integrated circuit or through other hardware such as a programmable gate array. In another example, the control module 706 may be implemented as control module 706-2, which is implemented as computer program code (having corresponding instructions) 705 and is executed by the one or more processors 702. For instance, the one or more memories 704 store instructions that, when executed by the one or more processors 702, cause the apparatus 700 to perform one or more of the operations as described herein. Furthermore, the one or more processors 702, one or more memories 704, and example algorithms (e.g., as flowcharts and/or signaling diagrams), encoded as instructions, programs, or code, are means for causing performance of the operations described herein.

The apparatus 700 to implement the functionality of control 706 may correspond to any of the apparatuses depicted herein. Alternatively, apparatus 700 and its elements may not correspond to any of the other apparatuses depicted herein, as apparatus 700 may be part of a self-organizing/optimizing network (SON) node or other node, such as a node in a cloud.

The apparatus 700 may also be distributed throughout the network including within and between apparatus 700 and any network element (such as a base station and/or terminal device and/or user equipment).

Interface 712 enables data communication and signaling between the various items of apparatus 700, as shown in FIG. 7. For example, the interface 712 may be one or more buses such as address, data, or control buses, and may include any interconnection mechanism, such as a series of lines on a motherboard or integrated circuit, fiber optics or other optical communication equipment, and the like. Computer program code (e.g. instructions) 705, including control 706 may comprise object-oriented software configured to pass data or messages between objects within computer program code 705. Computer program code (e.g. instructions) 705, including control 706 may comprise procedural, functional, or scripting code. The apparatus 700 need not comprise each of the features mentioned, or may comprise other features as well. The various components of apparatus 700 may at least partially reside in a common housing 728, or a subset of the various components of apparatus 700 may at least partially be located in different housings, which different housings may include housing 728.

FIG. 8 shows a schematic representation of non-volatile memory media 800a (e.g. computer/compact disc (CD) or digital versatile disc (DVD)) and 800b (e.g. universal serial bus (USB) memory stick) and 800c (e.g. cloud storage for downloading instructions and/or parameters 802 or receiving emailed instructions and/or parameters 802) storing instructions and/or parameters 802 which when executed by a processor allows the processor to perform one or more of the operations of the methods described herein. Instructions and/or parameters 802 may represent or correspond to a non-transitory computer readable medium.

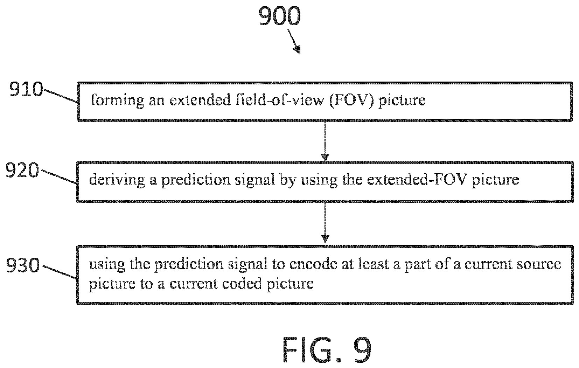

FIG. 9 is an example method 900, based on the examples described herein. At 910, the method includes forming an extended field-of-view (FOV) picture. At 920, the method includes deriving a prediction signal by using the extended-FOV picture. At 930, the method includes using the prediction signal to encode at least a part of a current source picture to a current coded picture. Method 900 may be performed with encoder 400 with spatial extrapolation and predictor 402, transmitting apparatus 680 with encoding 690, or apparatus 700 with spatial extrapolation as predictor 730.

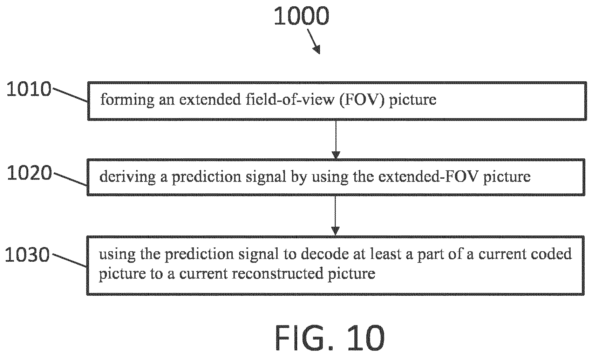

FIG. 10 is an example method 1000, based on the examples described herein. At 1010, the method includes forming an extended field-of-view (FOV) picture. At 1020, the method includes deriving a prediction signal by using the extended-FOV picture. At 1030, the method includes using the prediction signal to decode at least a part of a current coded picture to a current reconstructed picture. Method 1000 may be performed with decoder 500 with spatial extrapolation and predictor 502, receiving apparatus 682 with decoding 692, or apparatus 700 with spatial extrapolation as predictor 730.

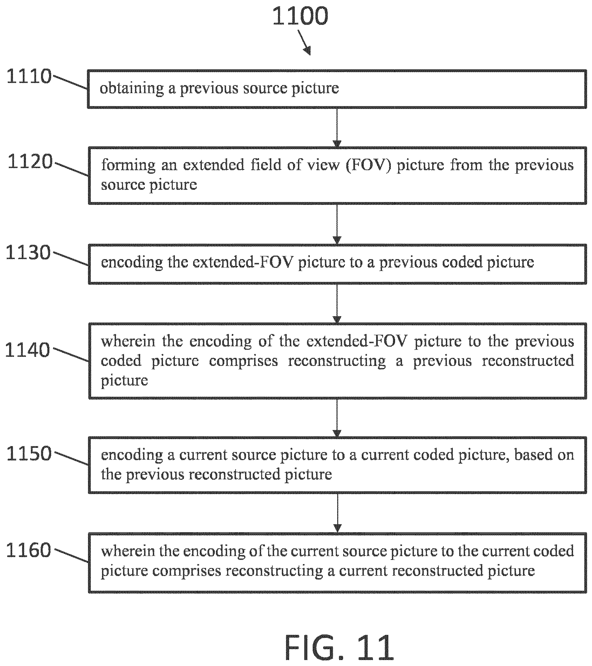

FIG. 11 is an example method 1100, based on the examples described herein. At 1110, the method includes obtaining a previous source picture. At 1120, the method includes forming an extended field of view (FOV) picture from the previous source picture. A 1130, the method includes encoding the extended-FOV picture to a previous coded picture. At 1140, the method includes wherein the encoding of the extended-FOV picture to the previous coded picture comprises reconstructing a previous reconstructed picture. At 1150, the method includes encoding a current source picture to a current coded picture, based on the previous reconstructed picture. At 1160, the method includes wherein the encoding of the current source picture to the current coded picture comprises reconstructing a current reconstructed picture. Method 1100 may be performed with encoder 400 with spatial extrapolation and predictor 402, transmitting apparatus 680 with encoding 690, or apparatus 700 with spatial extrapolation as predictor 730.

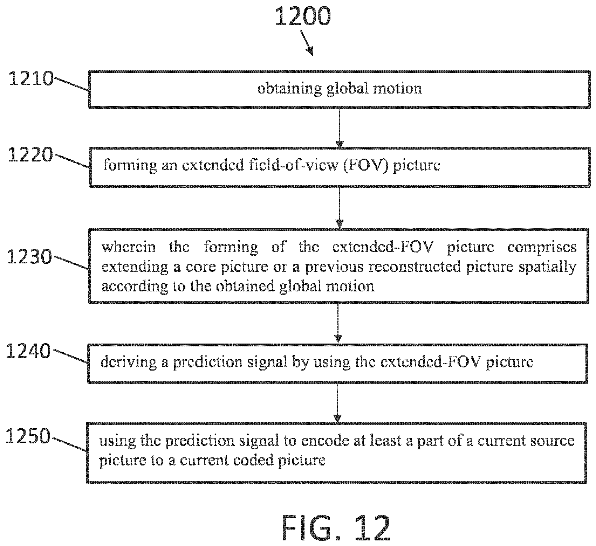

FIG. 12 is an example method 1200, based on the examples described herein. At 1210, the method includes obtaining global motion. At 1220, the method includes forming an extended field-of-view (FOV) picture. At 1230, the method includes wherein the forming of the extended-FOV picture comprises extending a core picture or a previous reconstructed picture spatially according to the obtained global motion. At 1240, the method includes deriving a prediction signal by using the extended-FOV picture. At 1250, the method includes using the prediction signal to encode at least a part of a current source picture to a current coded picture. Method 1200 may be performed with encoder 400 with spatial extrapolation and predictor 402, transmitting apparatus 680 with encoding 690, or apparatus 700 with spatial extrapolation as predictor 730.

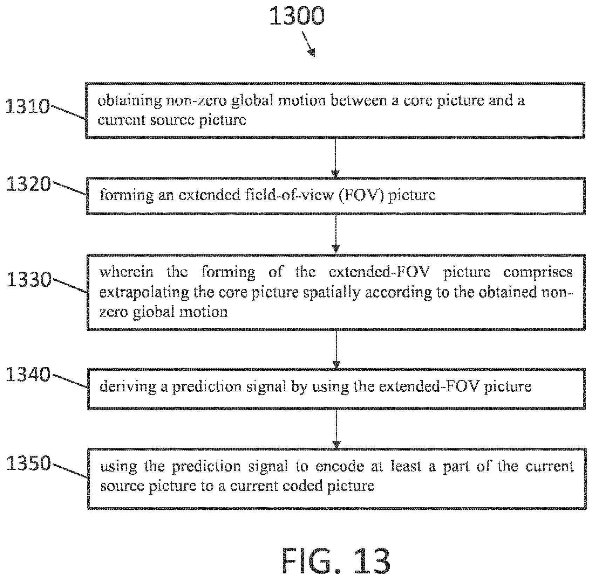

FIG. 13 is an example method, based on the examples described herein. At 1310, the method includes obtaining non-zero global motion between a core picture and a current source picture. At 1320, the method includes forming an extended field-of-view (FOV) picture. At 1330, the method includes wherein the forming of the extended-FOV picture comprises extrapolating the core picture spatially according to the obtained non-zero global motion. At 1340, the method includes deriving a prediction signal by using the extended-FOV picture. At 1350, the method includes using the prediction signal to encode at least a part of the current source picture to a current coded picture. Method 1300 may be performed with encoder 400 with spatial extrapolation and predictor 402, transmitting apparatus 680 with encoding 690, or apparatus 700 with spatial extrapolation as predictor 730.

The following examples are provided and described herein.

Example 1. A method including: forming an extended field-of-view (FOV) picture; deriving a prediction signal by using the extended-FOV picture; and using the prediction signal to encode at least a part of a current source picture to a current coded picture.

Example 2. The method of example 1, further including: encoding a previous source picture to a previous coded picture, wherein the encoding of the previous source picture to the previous coded picture comprises reconstructing a previous reconstructed picture; wherein the extended-FOV picture is formed by performing an inference of a spatial extrapolation neural network with the previous reconstructed picture as input; wherein the encoding of at least the part of the current source picture to the current coded picture comprises reconstructing a current reconstructed picture.

Example 3. The method of example 2, wherein the forming of the extended-FOV picture comprises extending the previous reconstructed picture spatially by a pre-defined or configured amount of sample rows and sample columns.

Example 4. The method of any of examples 1 to 3, further including: encoding a first area of the current source picture to a first set of slices of the current coded picture, wherein the encoding of the first area of the current source picture to the first set of slices of the current coded picture comprises reconstructing a core picture; wherein the extended-FOV picture is formed by performing an inference of a spatial extrapolation neural network with the core picture as input; using the prediction signal derived using the extended-FOV picture to encode a second area of the current source picture to a second set of slices of the current coded picture, wherein the encoding of the second area of the current source picture to the second set of slices of the current coded picture comprises reconstructing a reconstructed area; and reconstructing a current reconstructed picture from the core picture and the reconstructed area.

Example 5. The method of example 4, wherein the forming of the extended-FOV picture comprises extending the core picture spatially by a pre-defined or configured amount of sample rows and sample columns.

Example 6. The method of any of examples 1 to 5, further including: indicating with scaling windows a spatial correspondence between a previous reconstructed picture and a current reconstructed picture; wherein the encoding of at least the part of the current source picture to the current coded picture is based on the spatial correspondence between the previous reconstructed picture and the current reconstructed picture.

Example 7. The method of any of examples 1 to 6, further including: determining a scaling window of a previous reconstructed picture to be the same as a conformance cropping window of the previous reconstructed picture; wherein the conformance cropping window is configured to be used to control decoder output.

Example 8. The method of any of examples 1 to 7, further including: setting a scaling window of a current reconstructed picture to match a global motion from a previous reconstructed picture to a current reconstructed picture; wherein the encoding of at least the part of the current source picture to the current coded picture is based on setting the scaling window of the current reconstructed picture to match the global motion from the previous reconstructed picture to the current reconstructed picture.

Example 9. The method of any of examples 1 to 8, further including indicating that in-loop spatial extrapolation is enabled.

Example 10. The method of example 9 wherein the indicating that in-loop spatial extrapolation is enabled is performed using a sequence-level syntax structure.

Example 11. The method of any of examples 9 to 10, wherein the indicating that in-loop spatial extrapolation is enabled is performed using a flag, the in-loop spatial extrapolation is enabled when the flag is equal to 1, and the in-loop spatial extrapolation is disabled when the flag is equal to 0.

Example 12. A method including: forming an extended field-of-view (FOV) picture; deriving a prediction signal by using the extended-FOV picture; and using the prediction signal to decode at least a part of a current coded picture to a current reconstructed picture.

Example 13. The method of example 12, further including: decoding a previous coded picture to a previous reconstructed picture; and decoding an indication that the previous reconstructed picture is spatially extrapolated; wherein the extended-FOV picture is formed by performing an inference of a spatial extrapolation neural network with the previous reconstructed picture as input.

Example 14. The method of any of examples 12 to 13, further including: decoding a first set of slices of the current coded picture to a core picture; wherein the extended-FOV picture is formed by performing an inference of a spatial extrapolation neural network with the core picture as input; using the prediction signal derived using the extended-FOV picture to decode a second set of slices of the current coded picture to a reconstructed area; and reconstructing the current reconstructed picture from the core picture and the reconstructed area.

Example 15. The method of example 14, further including: decoding a previous coded picture to a previous reconstructed picture; wherein the extended-FOV picture is formed based on the decoding of the previous coded picture to the previous reconstructed picture.

Example 16. The method of any of examples 12 to 15, further including: decoding, from or along a bitstream, an identifier that identifies which spatial extrapolation neural network from a set of one or more spatial extrapolation neural networks is in use; wherein the set of one or more spatial extrapolation neural networks is predefined; wherein the extended-FOV picture is formed using the spatial extrapolation neural network identified with the identifier decoded from or along the bitstream.

Example 17. The method of example 16, wherein the identifier that identifies which spatial extrapolation neural network from the set of one or more spatial extrapolation neural networks is in use comprises an index.

Example 18. The method of any of examples 12 to 17, further including: decoding, from or along a bitstream, a representation or an identifier of a spatial extrapolation neural network; wherein the extended-FOV picture is formed using the spatial extrapolation neural network.

Example 19. The method of example 18, wherein the bitstream comprises a neural network coding and representation (NNR) bitstream that defines the spatial extrapolation neural network.

Example 20. The method of any of examples 18 to 19, wherein the identifier of the spatial extrapolation neural network decoded from or along the bitstream comprises a uniform resource identifier decoded from an adaptation parameter set, wherein a type of the adaptation parameter set indicates spatial extrapolation.

Example 21. The method of example 20, further including: decoding, from a picture-level syntax structure, which spatial extrapolation adaptation parameter set is in use.

Example 22. The method of any of examples 12 to 21, further including: decoding, from or along a bitstream, a representation or an identifier of an update of a spatial extrapolation neural network; wherein the extended-FOV picture is formed using the update of the spatial extrapolation neural network.

Example 23. The method of example 22, wherein the bitstream comprises a neural network coding and representation (NNR) bitstream that defines the update of the spatial extrapolation neural network.

Example 24. The method of any of examples 22 to 23, wherein the identifier of the update of the spatial extrapolation neural network decoded from or along the bitstream comprises a uniform resource identifier decoded from an adaptation parameter set, wherein a type of the adaptation parameter set indicates spatial extrapolation.

Example 25. The method of any of examples 22 to 24, wherein the update of the spatial extrapolation neural network is relative to an identified pre-defined spatial extrapolation neural network.

Example 26. The method of any of examples 22 to 25, wherein the update of the spatial extrapolation neural network is relative to a spatial extrapolation neural network whose representation or identification is present earlier in decoding order.

Example 27. An apparatus including: at least one processor; and at least one memory storing instructions that, when executed by the at least one processor, cause the apparatus at least to: form an extended field-of-view (FOV) picture; derive a prediction signal by using the extended-FOV picture; and use the prediction signal to encode at least a part of a current source picture to a current coded picture.

Example 28. An apparatus including: at least one processor; and at least one memory storing instructions that, when executed by the at least one processor, cause the apparatus at least to: form an extended field-of-view (FOV) picture; derive a prediction signal by using the extended-FOV picture; and use the prediction signal to decode at least a part of a current coded picture to a current reconstructed picture.

Example 29. An apparatus including: means for forming an extended field-of-view (FOV) picture; means for deriving a prediction signal by using the extended-FOV picture; and means for using the prediction signal to encode at least a part of a current source picture to a current coded picture.

Example 30. An apparatus including: means for forming an extended field-of-view (FOV) picture; means for deriving a prediction signal by using the extended-FOV picture; and means for using the prediction signal to decode at least a part of a current coded picture to a current reconstructed picture.

Example 31. A computer readable medium including instructions stored thereon for performing at least the following: forming an extended field-of-view (FOV) picture; deriving a prediction signal by using the extended-FOV picture; and using the prediction signal to encode at least a part of a current source picture to a current coded picture.

Example 32. A computer readable medium including instructions stored thereon for performing at least the following: forming an extended field-of-view (FOV) picture; deriving a prediction signal by using the extended-FOV picture; and using the prediction signal to decode at least a part of a current coded picture to a current reconstructed picture.

Example 33. A method including: obtaining a previous source picture; forming an extended field of view (FOV) picture from the previous source picture; encoding the extended-FOV picture to a previous coded picture; wherein the encoding of the extended-FOV picture to the previous coded picture comprises reconstructing a previous reconstructed picture; and encoding a current source picture to a current coded picture, based on the previous reconstructed picture; wherein the encoding of the current source picture to the current coded picture comprises reconstructing a current reconstructed picture.

Example 34. The method of example 33, further including: deriving a prediction signal from the previous reconstructed picture; and using the prediction signal to encode at least a part of the current source picture to the current coded picture.

Example 35. The method of any of examples 33 to 34, wherein the extended-FOV picture is formed using multiple source pictures including the previous source picture.

Example 36. The method of any of examples 33 to 35, further including: including a supplemental enhancement information message in or along a bitstream to indicate that the previous reconstructed picture has an extended field of view.

Example 37. The method of example 36, further including: encoding a syntax element in the supplemental enhancement information message, wherein the syntax element is indicative of how the extended-FOV picture used for encoding the previous coded picture for which the supplemental enhancement information message persists was obtained.

Example 38. The method of example 37, wherein the syntax element is indicative of at least one of the following: a spatial extrapolation neural network was used to extend the previous source picture to obtain the extended-FOV picture; the previous source picture contained a larger field of view than what is indicated by a conformance cropping window.

Example 39. The method of example 36, 37 or 38, wherein the supplemental enhancement information message is an encoder optimization information supplemental enhancement information message.

Example 40. The method of example 39, further including: adding a spatial extrapolation optimization type to a syntax element of the encoder optimization information supplemental enhancement information message; wherein the spatial extrapolation optimization type is configured to indicate a type of optimization method.

Example 41. The method of example 40, further including: performing at least one or more of: determining whether the syntax element is greater than zero or equal to zero, or determining a bitwise AND operation result with performing a bitwise AND operation with the syntax element and the spatial extrapolation optimization type; wherein when the bitwise AND operation result evaluates to a value not equal to zero, the type of optimization method indicated with the spatial extrapolation optimization type has been applied; wherein when the syntax element is greater than zero and the bitwise AND operation result evaluates to a value equal to zero, the type of optimization method indicated with the spatial extrapolation optimization type has not been applied; wherein when the syntax element is equal to zero, an optimization method as determined by an application has been applied.

Example 42. The method of any of examples 40 to 41, further including: performing at least one or more of: determining whether the syntax element is greater than zero or equal to zero, or determining that a bitwise evaluation result is not equal to zero when, for each bit of a set of at least one bit that represents the syntax element and for each bit of a set of at least one bit that represents the spatial extrapolation optimization type, a bit of the set of at least one bit that represents the syntax element that is in a bit position within the set of at least one bit that represents the syntax element is equal to a bit of the set of at least one bit that represents the spatial extrapolation optimization type that is in a corresponding bit position within the set of at least one bit that represents the spatial extrapolation type, and otherwise determine that the bitwise evaluation result is equal to zero; wherein when the bitwise evaluation result is not equal to zero, the type of optimization method indicated with the spatial extrapolation optimization type has been applied; wherein when the syntax element is greater than zero and the bitwise evaluation result is equal to zero, the type of optimization method indicated with the spatial extrapolation optimization type has not been applied; wherein when the syntax element is equal to zero, an optimization method as determined by an application has been applied.

Example 43. The method of any of examples 38 to 42, wherein the supplemental enhancement information message comprises information that characterizes the one or more spatially extrapolated areas of the previous reconstructed picture.

Example 44. The method of any of examples 38 to 43, wherein the supplemental enhancement information message comprises information indicative of an area of the previous reconstructed picture that has not been extrapolated.

Example 45. The method of any of examples 33 to 44, further including: including a supplemental enhancement information message in or along a bitstream, wherein: the supplemental enhancement information message comprises a flag indicative of whether a conformance cropping window of the previous reconstructed picture defines an area of the previous reconstructed picture that has not been extrapolated, or the supplemental enhancement information message comprises a flag indicative of whether a scaling window of the previous reconstructed picture defines the area of the previous reconstructed picture that has not been extrapolated, or the supplemental enhancement information message comprises at least one syntax element that indicates a count of sample rows or sample columns outside of the previous reconstructed picture.

Example 46. The method of any of examples 33 to 45, further including: applying a spatial extrapolation neural network to obtain the extended-FOV picture from the previous source picture.

Example 47. The method of example 33 or example 46, further including: obtaining global motion with an encoder; wherein when the encoder has obtained non-zero global motion between the previous source picture and the current source picture, the forming of the extended-FOV picture comprises extending the previous source picture spatially according to the obtained global motion.

Example 48. The method of example 47, wherein the global motion comprises at least one of: camera panning, or swiveling a camera horizontally, or camera tilting, or rotating a camera up or down, or camera rotation, or zooming in or out, or moving a camera with respect to a scene.

Example 49. The method of example 33 or 46, wherein the previous source picture is extrapolated by a pre-defined or configured amount of sample rows and sample columns.

Example 50. The method of any of examples 33 to 49, further including: indicating with scaling windows a spatial correspondence between the previous reconstructed picture and the current reconstructed picture.

Example 51. The method of any of examples 33 to 50, further including: determining a scaling window of the previous reconstructed picture to be the same as a conformance cropping window of the previous reconstructed picture.

Example 52. The method of any of examples 33 to 51, further including: setting a scaling window of the current reconstructed picture to match a global motion from the previous reconstructed picture to the current reconstructed picture.

Example 53. The method of any of examples 33 to 52, wherein the obtained previous source picture has a larger field of view than a field of view intended for decoder output or display, wherein the forming of the extended-FOV picture comprises obtaining the previous source picture that has the larger field of view than the field of view intended for decoder output or display, and wherein obtaining the previous source picture that has the larger field of view than the field of view intended for decoder output or display comprises: capturing at a field of view with a camera sensor, when a cropped version of the field of view captured with the camera sensor is intended for decoder output or display, or generating an extended field of view of a game scene.

Example 54. The method of example 53, wherein capturing at the field of view with the camera sensor is performed with one of: a handheld camera, where the obtained previous source picture has a larger field of view than the field of view intended for decoder output or display due to hand shaking, wherein the encoding of the current source picture to the current coded picture based on the previous reconstructed picture comprises compensating for the hand shaking, or a wide field of view camera, where the obtained previous source picture is chosen for displaying and is taken as a close-up picture such that a distance between the wide field of view camera and a subject of the previous source picture is within a range, or a panoramic camera with a viewport chosen for transmission or displaying, or an omnidirectional camera with a viewport chosen for transmission or displaying, or a camera array with a viewport chosen for transmission or displaying.

Example 55. The method of example 54, wherein the close-up picture is taken when a talking person that is the subject of the previous source picture is automatically detected, and the close-up picture automatically follows a movement of the talking person.

Example 56. The method of any of examples 54 to 55, wherein the close-up picture is taken when at least one talking person that is the subject of the previous source picture among two or more talking persons is automatically detected, and the close-up picture automatically follows a change of talking persons.

Example 57. An apparatus including: at least one processor; and at least one memory storing instructions that, when executed by the at least one processor, cause the apparatus at least to: obtain a previous source picture; form an extended field of view (FOV) picture from the previous source picture; encode the extended-FOV picture to a previous coded picture; wherein the encoding of the extended-FOV picture to the previous coded picture comprises reconstructing a previous reconstructed picture; and encode a current source picture to a current coded picture, based on the previous reconstructed picture; wherein the encoding of the current source picture to the current coded picture comprises reconstructing a current reconstructed picture.

Example 58. An apparatus including: means for obtaining a previous source picture; means for forming an extended field of view (FOV) picture from the previous source picture; means for encoding the extended-FOV picture to a previous coded picture; wherein the encoding of the extended-FOV picture to the previous coded picture comprises reconstructing a previous reconstructed picture; and means for encoding a current source picture to a current coded picture, based on the previous reconstructed picture; wherein the encoding of the current source picture to the current coded picture comprises reconstructing a current reconstructed picture.

Example 59. A computer readable medium including instructions stored thereon for performing at least the following: obtaining a previous source picture; forming an extended field of view (FOV) picture from the previous source picture; encoding the extended-FOV picture to a previous coded picture; wherein the encoding of the extended-FOV picture to the previous coded picture comprises reconstructing a previous reconstructed picture; and encoding a current source picture to a current coded picture, based on the previous reconstructed picture; wherein the encoding of the current source picture to the current coded picture comprises reconstructing a current reconstructed picture.

Example 60. A method including: obtaining global motion; forming an extended field-of-view (FOV) picture; wherein the forming of the extended-FOV picture comprises extending a core picture or a previous reconstructed picture spatially according to the obtained global motion; deriving a prediction signal by using the extended-FOV picture; and using the prediction signal to encode at least a part of a current source picture to a current coded picture.

Example 61. The method of example 60, wherein the global motion comprises at least one of: camera panning, or swiveling a camera horizontally, or camera tilting, or rotating a camera up, or rotating a camera down, or camera rotation, or zooming in, or zooming out, or moving a camera with respect to a scene.

Example 62. The method of any of examples 60 to 61, wherein the global motion is obtained using a global motion estimation method.

Example 63. The method of any of examples 60 to 62, wherein the global motion is obtained using a global disparity estimation method for multi-view video, and the method is applied to pictures from different views of the same time instance.

Example 64. The method of any of examples 60 to 63, wherein the global motion is obtained from an engine generating video content.

Example 65. The method of example 64, wherein the engine generating the video content comprises a game engine, or a rendering engine for computer-generated video content.

Example 66. The method of any of examples 60 to 65, wherein the global motion is obtained from sensors attached to or integrated in a camera that captures source video content, wherein the sensors obtain one or more of the following: orientation, or position, or rotation direction, or speed, or acceleration, or movement direction.

Example 67. The method of example 66, wherein the sensors comprise one or more of: an accelerometer, or a gyroscope, or a magnetometer.

Example 68. The method of any of examples 60 to 67, wherein: the global motion is obtained between the core picture and the current source picture, and the forming of the extended field-of-view (FOV) picture comprises extrapolating the core picture by sample rows and sample columns that cover the global motion.

Example 69. The method of any of examples 60 to 68, wherein: the global motion is obtained between the core picture and a selected source picture, and the forming of the extended field-of-view (FOV) picture comprises extrapolating the core picture by sample rows and sample columns that cover the global motion.

Example 70. The method of example 69, wherein the selected source picture comprises a next picture in decoding order that is spatially extrapolated.

Example 71. The method of any of examples 60 to 70, wherein: the global motion is obtained from the core picture to each source picture in a sequence of source pictures, and the forming of the extended field-of-view (FOV) picture comprises extrapolating the core picture by sample rows and sample columns that cover the global motion relative to each source picture in the sequence of source pictures.

Example 72. The method of example 71, wherein the sequence of source pictures comprises: pictures coded as a group of pictures, or pictures up to but excluding a next picture in decoding order that is spatially extrapolated.

Example 73. A method including: obtaining non-zero global motion between a core picture and a current source picture; forming an extended field-of-view (FOV) picture; wherein the forming of the extended-FOV picture comprises extrapolating the core picture spatially according to the obtained non-zero global motion; deriving a prediction signal by using the extended-FOV picture; and using the prediction signal to encode at least a part of the current source picture to a current coded picture.

Example 74. The method of example 73, wherein the core picture is extrapolated spatially according to the obtained non-zero global motion between the core picture and the current source picture based on a property of the core picture.

Example 75. The method of example 74, wherein the spatial extrapolation of the core picture according to the obtained non-zero global motion between the core picture and the current source picture is based on the property of the core picture being provided in an encoder configuration.

Example 76. The method of any of examples 74 to 75, wherein the spatial extrapolation of the core picture according to the obtained non-zero global motion between the core picture and the current source picture is based on the property comprising the core picture being an intra random access point picture.

Example 77. The method of any of examples 74 to 76, wherein the spatial extrapolation of the core picture according to the obtained non-zero global motion between the core picture and the current source picture is based on the property comprising the core picture being at a temporal sublayer.

Example 78. The method of any of examples 74 to 77, wherein the spatial extrapolation of the core picture according to the obtained non-zero global motion between the core picture and the current source picture is based on the property comprising the core picture being at temporal sublayer 0.

Example 79. The method of any of examples 73 to 78, further including: detecting a scene cut; and wherein the core picture starts a new scene, based on the detected scene cut; wherein the forming of the extended-FOV picture comprises extrapolating the core picture that starts the new scene spatially.

Example 80. An apparatus including: at least one processor; and at least one memory storing instructions that, when executed by the at least one processor, cause the apparatus at least to: obtain global motion; form an extended field-of-view (FOV) picture; wherein the forming of the extended-FOV picture comprises extending a core picture or a previous reconstructed picture spatially according to the obtained global motion; derive a prediction signal by using the extended-FOV picture; and use the prediction signal to encode at least a part of a current source picture to a current coded picture.

Example 81. An apparatus including: means for obtaining global motion; means for forming an extended field-of-view (FOV) picture; wherein the forming of the extended-FOV picture comprises extending a core picture or a previous reconstructed picture spatially according to the obtained global motion; means for deriving a prediction signal by using the extended-FOV picture; and means for using the prediction signal to encode at least a part of a current source picture to a current coded picture.

Example 82. A computer readable medium including instructions stored thereon for performing at least the following: obtaining global motion; forming an extended field-of-view (FOV) picture; wherein the forming of the extended-FOV picture comprises extending a core picture or a previous reconstructed picture spatially according to the obtained global motion; deriving a prediction signal by using the extended-FOV picture; and using the prediction signal to encode at least a part of a current source picture to a current coded picture.

Example 83. An apparatus including: at least one processor; and at least one memory storing instructions that, when executed by the at least one processor, cause the apparatus at least to: obtain non-zero global motion between a core picture and a current source picture; form an extended field-of-view (FOV) picture; wherein the forming of the extended-FOV picture comprises extrapolating the core picture spatially according to the obtained non-zero global motion; derive a prediction signal by using the extended-FOV picture; and use the prediction signal to encode at least a part of the current source picture to a current coded picture.

Example 84. An apparatus including: means for obtaining non-zero global motion between a core picture and a current source picture; means for forming an extended field-of-view (FOV) picture; wherein the forming of the extended-FOV picture comprises extrapolating the core picture spatially according to the obtained non-zero global motion; means for deriving a prediction signal by using the extended-FOV picture; and means for using the prediction signal to encode at least a part of the current source picture to a current coded picture.

Example 85. A computer readable medium including instructions stored thereon for performing at least the following: obtaining non-zero global motion between a core picture and a current source picture; forming an extended field-of-view (FOV) picture; wherein the forming of the extended-FOV picture comprises extrapolating the core picture spatially according to the obtained non-zero global motion; deriving a prediction signal by using the extended-FOV picture; and using the prediction signal to encode at least a part of the current source picture to a current coded picture.

Embodiments have been described in relation to the term picture. It is to be understood that some embodiments apply similarly to independent subpictures or any image segments. For example, the embodiments in section 2.6 may be applied to independent subpictures instead of or in addition to pictures. In an example embodiment, the method comprises: encoding a previous source picture to a previous coded picture, wherein the encoding comprises reconstructing a previous reconstructed subpicture; forming the extended-FOV subpicture by performing an inference of a spatial extrapolation neural network with the previous reconstructed subpicture as input; deriving a prediction signal by using the extended-FOV subpicture; using the prediction signal to encode at least a part of a current source picture to a current coded picture wherein the encoding comprises reconstructing a current reconstructed picture.

Some embodiments have been described in relation to terms and/or syntax elements relevant to certain video coding formats, such as VVC. It needs to be understood that embodiments apply similarly to respective terms and/or syntax elements of any video coding format.

In the above, some embodiments have been described with reference to SEI messages. It needs to be understood that embodiments may be similarly realized with any other similar syntax structures, such as metadata OBUs.

In the above, some embodiments have been described with reference to SEI messages and some embodiments describe a sample reconstruction performed as post-processing to decoding. It is to be understood that embodiments may be similarly realized with any syntax structures, such as parameter sets, which may imply normative decoding. Furthermore, embodiments may be similarly realized when the sample reconstruction is performed normatively to

**EP 4 687 343 A1**

reconstruct pictures that are normatively output by the decoder and/or may be used as reference pictures for predicting other pictures.

In the above, some example embodiments have been described with the help of syntax of the bitstream. It needs to be understood, however, that the corresponding structure and/or computer program may reside at the encoder for generating the bitstream and/or at the decoder for decoding the bitstream.

In the above, some embodiments have been described in relation to particular syntax elements and/or syntax structures. It needs to be understood that corresponding embodiments for encoding may be realized by including encoding steps for creating the particular syntax elements and/or syntax structures. Similarly, it needs to be understood that corresponding embodiments for decoding may be realized by including decoding steps for reading the particular syntax elements and/or syntax structures. Furthermore, when the decoded syntax elements and/or syntax structures imply certain processing, such as certain processing order of SEI messages, corresponding embodiments for decoding may include such processing steps.

In the above, where example embodiments have been described with reference to an encoder, it needs to be understood that the resulting bitstream and the decoder have corresponding elements in them. Likewise, where example embodiments have been described with reference to a decoder, it needs to be understood that the encoder has structure and/or computer program for generating the bitstream to be decoded by the decoder.

References to a 'computer', 'processor', etc. should be understood to encompass not only computers having different architectures such as single/multi-processor architectures and sequential /parallel architectures but also specialized circuits such as field-programmable gate arrays (FPGAs), application specific circuits (ASICs), signal processing devices and other processing circuitry. References to computer program, instructions, code etc. should be understood to encompass software for a programmable processor or firmware such as, for example, the programmable content of a hardware device such as instructions for a processor, or configuration settings for a fixed-function device, gate array or programmable logic device, etc.

The term "non-transitory," as used herein, is a limitation of the medium itself (i.e., tangible, not a signal) as opposed to a limitation on data storage persistency (e.g., RAM vs. ROM).

As used herein, the term 'circuitry', 'circuit' and variants may refer to any of the following: (a) hardware circuit implementations, such as implementations in analog and/or digital circuitry, and (b) combinations of circuits and software (and/or firmware), such as (as applicable): (i) a combination of processor(s) or (ii) portions of processor(s)/software including digital signal processor(s), software, and one or more memories that work together to cause an apparatus to perform various functions, and (c) circuits, such as a microprocessor(s) or a portion of a microprocessor(s), that require software or firmware for operation, even when the software or firmware is not physically present. As a further example, as used herein, the term 'circuitry' would also cover an implementation of merely a processor (or multiple processors) or a portion of a processor and its (or their) accompanying software and/or firmware. The term 'circuitry' would also cover, for example and when applicable to the particular element, a baseband integrated circuit or applications processor integrated circuit for a mobile phone or a similar integrated circuit in a server, a cellular network device, or another network device. Circuitry or circuit may also be used to mean a function or a process used to execute a method.

It should be understood that the foregoing description is only illustrative. Various alternatives and modifications may be devised by those skilled in the art. For example, features recited in the various dependent claims could be combined with each other in any suitable combination(s). In addition, features from different embodiments described above could be selectively combined into a new embodiment. Accordingly, the description is intended to embrace all such alternatives, modifications and variances which fall within the scope of the appended claims.

The following acronyms and abbreviations that may be found in the specification and/or the drawing figures are defined as follows (the abbreviations may be appended with each other or with other characters using e.g. a hyphen, dash (-), or number (or abbreviations having a character may be the same with a character removed), and may be case insensitive):

| | |
|---|---|
| 2D | two-dimensional |
| 3D | three-dimensional |
| ALF | adaptive loop filtering |
| APS | adaptation parameter set |
| ASIC | application specific integrated circuit |
| AV1 | AOM Video 1 |
| AV1 | AOM Video 2 |
| AVC | advanced video coding |
| Cb | chrominance blue |
| Cg | chrominance green |
| Co | chrominance orange |
| CPU | central processing unit |

| Cr | chrominance red |
| CTU | coding tree unit |
| Exp | exponential |
| FOV | field-of-view |
| FPGA | field programmable gate array |
| GPU | graphics processing unit |
| H.2xx | family of video coding standards (e.g. H.263, H.264, H.265, H.266, H.274) |
| HEVC | high efficiency video coding |
| HMD | head-mounted display |
| ID, Id | identifier |
| IEC | International Electrotechnical Commission |
| I/F | interface |
| I/O | input/output |
| ISO | International Organization for Standardization |
| ITU-T | International Telecommunication Union Telecommunication Standardization Sector |
| JTC | Joint Technical Committee |
| JTC1 | Joint Technical Committee Information Technology |
| JVET | joint video experts team |
| LCU | largest coding unit |
| LMCS | luma mapping with chroma scaling |
| MPEG-H | Moving Picture Experts Group High Efficiency |
| MPEG-I | Moving Picture Experts Group Immersive |
| NAL | network abstraction layer |
| NN | neural network |
| NNPFC | neural-network post-filter characteristics |
| NNR | neural network coding and representation |
| nuh | NAL unit header |
| N/W | network |
| PPS | picture parameter set |
| RAM | random access memory |
| RBSP | raw byte sequence payload |
| RFM | reference frame memory |
| ROM | read only memory |
| RPR | reference picture resampling |
| SC | subcommittee |
| SEI | supplemental enhancement information |
| SON | self-organizing/optimizing network |
| SPS | sequence parameter set |
| tid | temporal ID |
| ue(v) | unsigned integer 0-th order Exp-Golomb-coded syntax element with the left bit first. |
| UI | user interface |
| u(n) | unsigned integer of n bits |
| URI | uniform resource identifier |
| USB | universal serial bus |
| VVC | versatile video coding |
| WG | working group |

**Claims**

1. An apparatus comprising:

    means for obtaining global motion;
    means for forming an extended field-of-view (FOV) picture;
    wherein the forming of the extended-FOV picture comprises extending a core picture or a previous reconstructed picture spatially according to the obtained global motion;
    means for deriving a prediction signal by using the extended-FOV picture; and
    means for using the prediction signal to encode at least a part of a current source picture to a current coded picture.

2. The apparatus of claim 1, wherein the global motion comprises at least one of:

   camera panning, or
   swiveling a camera horizontally, or
   camera tilting, or
   rotating a camera up, or
   rotating a camera down, or
   camera rotation, or
   zooming in, or
   zooming out, or
   moving a camera with respect to a scene.

3. The apparatus of any of claims 1 to 2, wherein the global motion is obtained using a global motion estimation method.

4. The apparatus of any of claims 1 to 3, wherein the global motion is obtained using a global disparity estimation method for multi-view video, and the method is applied to pictures from different views of the same time instance.

5. The apparatus of any of claims 1 to 4, wherein the global motion is obtained from an engine generating video content, wherein the engine generating the video content comprises a game engine, or a rendering engine for computer-generated video content.

6. The apparatus of any of claims 1 to 5, wherein the global motion is obtained from sensors attached to or integrated in a camera that captures source video content, wherein the sensors obtain one or more of the following: orientation, or position, or rotation direction, or speed, or acceleration, or movement direction, wherein the sensors comprise one or more of: an accelerometer, or a gyroscope, or a magnetometer.

7. The apparatus of any of claims 1 to 6, wherein:

   the global motion is obtained between the core picture and the current source picture, and
   the forming of the extended field-of-view (FOV) picture comprises extrapolating the core picture by sample rows and sample columns that cover the global motion.

8. The apparatus of any of claims 1 to 7, wherein:

   the global motion is obtained between the core picture and a selected source picture, and
   the forming of the extended field-of-view (FOV) picture comprises extrapolating the core picture by sample rows and sample columns that cover the global motion, wherein the selected source picture comprises a next picture in decoding order that is spatially extrapolated.

9. The apparatus of any of claims 1 to 8, wherein:

   the global motion is obtained from the core picture to each source picture in a sequence of source pictures, and
   the forming of the extended field-of-view (FOV) picture comprises extrapolating the core picture by sample rows and sample columns that cover the global motion relative to each source picture in the sequence of source pictures, wherein the sequence of source pictures comprises:

      pictures coded as a group of pictures, or
      pictures up to but excluding a next picture in decoding order that is spatially extrapolated.

10. An apparatus comprising:

    means for obtaining non-zero global motion between a core picture and a current source picture;
    means for forming an extended field-of-view (FOV) picture;
    wherein the forming of the extended-FOV picture comprises extrapolating the core picture spatially according to the obtained non-zero global motion;
    means for deriving a prediction signal by using the extended-FOV picture; and
    means for using the prediction signal to encode at least a part of the current source picture to a current coded picture.

11. The apparatus of claim 10, wherein the core picture is extrapolated spatially according to the obtained non-zero global motion between the core picture and the current source picture based on a property of the core picture, wherein the spatial extrapolation of the core picture according to the obtained non-zero global motion between the core picture and the current source picture is based on one of the following:

> the property of the core picture being provided in an encoder configuration
> the property comprising the core picture being an intra random access point picture
> the property comprising the core picture being at a temporal sublayer.
> the property comprising the core picture being at temporal sublayer 0.

12. The apparatus of any of claims 10 to 11, further comprising:

> means for detecting a scene cut; and
> wherein the core picture starts a new scene, based on the detected scene cut;
> wherein the forming of the extended-FOV picture comprises extrapolating the core picture that starts the new scene spatially.

13. A method comprising:

> obtaining global motion;
> forming an extended field-of-view (FOV) picture;
> wherein the forming of the extended-FOV picture comprises extending a core picture or a previous reconstructed picture spatially according to the obtained global motion;
> deriving a prediction signal by using the extended-FOV picture; and
> using the prediction signal to encode at least a part of a current source picture to a current coded picture.

14. A method comprising:

> obtaining non-zero global motion between a core picture and a current source picture;
> forming an extended field-of-view (FOV) picture;
> wherein the forming of the extended-FOV picture comprises extrapolating the core picture spatially according to the obtained non-zero global motion;
> deriving a prediction signal by using the extended-FOV picture; and
> using the prediction signal to encode at least a part of the current source picture to a current coded picture.

15. A computer readable medium comprising instructions stored thereon for performing at least the following:

> obtaining non-zero global motion between a core picture and a current source picture;
> forming an extended field-of-view (FOV) picture;
> wherein the forming of the extended-FOV picture comprises extrapolating the core picture spatially according to the obtained non-zero global motion;
> deriving a prediction signal by using the extended-FOV picture; and
> using the prediction signal to encode at least a part of the current source picture to a current coded picture.

FIG. 1

FIG. 2

FIG. 3

FIG. 4

FIG. 5

FIG. 6

700

728

714

706-1

702

712 Tx, 718

726

706

Control
Module

Processor(s)

Control
Module

Spatial
extrapolation
as predictor
730

704

705

Memory(ies)

Computer
Program
Code
(Instructions)

Control
Module

706-2

Rx, 720 716

710

724

N/W I/F(s)

I/O and UI
Circuitry and
Elements

708

FIG. 7

802 800a

802 800b

800c 802

FIG. 8

900

910 — | forming an extended field-of-view (FOV) picture |

920 — | deriving a prediction signal by using the extended-FOV picture |

930 — | using the prediction signal to encode at least a part of a current source picture to a current coded picture |

FIG. 9

1000

1010 — | forming an extended field-of-view (FOV) picture |

1020 — | deriving a prediction signal by using the extended-FOV picture |

1030 — | using the prediction signal to decode at least a part of a current coded picture to a current reconstructed picture |

FIG. 10

1100

1110 — obtaining a previous source picture

1120 — forming an extended field of view (FOV) picture from the previous source picture

1130 — encoding the extended-FOV picture to a previous coded picture

1140 — wherein the encoding of the extended-FOV picture to the previous coded picture comprises reconstructing a previous reconstructed picture

1150 — encoding a current source picture to a current coded picture, based on the previous reconstructed picture

1160 — wherein the encoding of the current source picture to the current coded picture comprises reconstructing a current reconstructed picture

FIG. 11

1200

1210 — obtaining global motion

1220 — forming an extended field-of-view (FOV) picture

1230 — wherein the forming of the extended-FOV picture comprises extending a core picture or a previous reconstructed picture spatially according to the obtained global motion

1240 — deriving a prediction signal by using the extended-FOV picture

1250 — using the prediction signal to encode at least a part of a current source picture to a current coded picture

FIG. 12

1300

1310 — obtaining non-zero global motion between a core picture and a current source picture

1320 — forming an extended field-of-view (FOV) picture

1330 — wherein the forming of the extended-FOV picture comprises extrapolating the core picture spatially according to the obtained non-zero global motion

1340 — deriving a prediction signal by using the extended-FOV picture

1350 — using the prediction signal to encode at least a part of the current source picture to a current coded picture

FIG. 13

| Europäisches Patentamt European Patent Office Office européen des brevets | **EUROPEAN SEARCH REPORT** | **Application Number** EP 25 18 6378 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIA JIANGHAO ET AL: "Deep Reference Frame Generation Method for VVC Inter Prediction Enhancement", IEEE TRANSACTIONS ON CIRCUITS AND SYSTEMS FOR VIDEO TECHNOLOGY, IEEE, USA, vol. 34, no. 5, 1 August 2023 (2023-08-01), pages 3111-3124, XP011970017, ISSN: 1051-8215, DOI: 10.1109/TCSVT.2023.3299410 [retrieved on 2023-08-01] | 1-3,7-15 | INV. H04N19/527 H04N19/597 H04N19/59 |
| A | * figures 1-4 * * section III.A * | 4-6 | |
| X | CHENG FEI ET AL: "Texture Plus Depth Video Coding Using Camera Global Motion Information", IEEE TRANSACTIONS ON MULTIMEDIA, IEEE, USA, vol. 19, no. 11, 1 November 2017 (2017-11-01), pages 2361-2374, XP011671131, ISSN: 1520-9210, DOI: 10.1109/TMM.2017.2700622 [retrieved on 2017-10-12] * abstract * * figures 3, 6 * * page 2362, left-hand column * * section II.A "Overview of the Proposed Scheme"; the whole document * * section II.B "Texture Frame Projection and Depth Map Requantization" * | 1-15 | |

TECHNICAL FIELDS SEARCHED (IPC)

H04N

-/--

The present search report has been drawn up for all claims

| Place of search | Date of completion of the search | Examiner |
|---|---|---|
| The Hague | 24 November 2025 | Stoufs, Maryse |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 25 18 6378

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WU HUISI ET AL: "Cartoon Animation Outpainting With Region-Guided Motion Inference", IEEE TRANSACTIONS ON VISUALIZATION AND COMPUTER GRAPHICS, IEEE, USA, vol. 31, no. 4, 18 March 2024 (2024-03-18), pages 2086-2100, XP011999941, ISSN: 1077-2626, DOI: 10.1109/TVCG.2024.3379125 [retrieved on 2024-03-19] * the whole document * | 1-15 | |
| A | DEHAN LOIC ET AL: "Complete and temporally consistent video outpainting", 2022 IEEE/CVF CONFERENCE ON COMPUTER VISION AND PATTERN RECOGNITION WORKSHOPS (CVPRW), IEEE, 19 June 2022 (2022-06-19), pages 686-694, XP034174486, DOI: 10.1109/CVPRW56347.2022.00084 [retrieved on 2022-08-23] * the whole document * | 1-15 | TECHNICAL FIELDS SEARCHED (IPC) |

The present search report has been drawn up for all claims

| Place of search | Date of completion of the search | Examiner |
|---|---|---|
| The Hague | 24 November 2025 | Stoufs, Maryse |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                      
& : member of the same patent family, corresponding document

EPO FORM 1503 03.82 (P04C01)